(19) Europäisches Patentamt / European Patent Office / Office européen des brevets

(11) **EP 4 195 804 A1**

(12) **EUROPEAN PATENT APPLICATION**
published in accordance with Art. 153(4) EPC

(43) Date of publication:
**14.06.2023 Bulletin 2023/24**

(21) Application number: **21930605.7**

(22) Date of filing: **28.10.2021**

(51) International Patent Classification (IPC):
**H04W 68/00** (2009.01)   **H04W 52/02** (2009.01)
**H04W 68/02** (2009.01)

(52) Cooperative Patent Classification (CPC):
**H04W 68/005; H04W 52/0229; H04W 68/025**

(86) International application number:
**PCT/CN2021/127177**

(87) International publication number:
**WO 2023/070467 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Transsion Holdings Co., Ltd.
Shenzhen, Guangdong 518057 (CN)**

(72) Inventors:
• **ZHU, Rongchang**
  **Shenzen, Guandong 518057 (CN)**
• **HUANG, Junwei**
  **Shenzen, Guandong 518057 (CN)**

(74) Representative: **Elzaburu S.L.P.
Edificio Torre de Cristal
Paseo de la Castellana 259 C, planta 28
28046 Madrid (ES)**

(54) **PROCESSING METHOD, COMMUNICATION DEVICE, COMMUNICATION SYSTEM AND STORAGE MEDIUM**

(57)   The present application provides a processing method, a communication device, a communication system and a storage medium, where the method is applied in a terminal device, including: receiving configuration information, where the configuration information is used to indicate a monitoring occasion of a paging early indication; receiving the paging early indication according to the monitoring occasion, where the paging early indication is used to indicate whether a paging message exists in at least one paging occasion. The solution of the present application can indicate the monitoring occasion of the paging early indication through the configuration information, so as to improve the success rate of receiving the paging early indication.

FIG. 3

**Description**

**TECHNICAL FIELD**

The present application relates to communication technology, and in particular, to a processing method, a communication device, a communication system and a storage medium.

**BACKGROUND**

In some implementations, a network device can transmit a paging early indication (Paging Early Indication, PEI) to a terminal device, to inform the terminal device whether a paging message exists in a paging occasion (paging occasion, PO), so as to reduce invalid PO monitoring.

In the process of conceiving and implementing the present application, the inventor found that there are at least the following problems: in some cases, such as PEI conflicts with high-priority services, missed detection of PEI, poor channel environment leads to a low success rate of PEI analysis, etc., the terminal device may fail to successfully receive PEI, resulting in delay of wake-up of the terminal device, thus affecting data transmission.

The above description is intended to provide general background information and does not necessarily constitute the prior art.

**SUMMARY**

The present application provides a processing method, a communication device, a communication system and a storage medium, to solve the above technical problems.

In a first aspect, the present application provides a processing method, applied in a terminal device, including the following steps:

S1, receiving configuration information, where the configuration information is used to indicate a monitoring occasion of a paging early indication; and
S2, receiving the paging early indication according to the monitoring occasion, where the paging early indication is used to indicate whether a paging message exists in at least one paging occasion.

Optionally, the configuration information includes at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

Optionally, the number of transmission times is a number of transmission times of the paging early indication corresponding to each synchronous signal block.

Optionally, the start parameter includes at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

Optionally, a radio frame where the start moment is located, the period of the paging early indication, the number of frames of the paging early indication and an identifier of the terminal device satisfy the following conditions:

$$PEI\_SFN \bmod T1 = (T1 \operatorname{div} N1)*(UE\_ID \bmod N1),$$

PEI_SFN is the radio frame where the start moment is located, T1 is the period of the paging early indication, N1 is the number of frames of the paging early indication included in the period of the paging early indication, UE_ID is the identifier of the terminal device.

Optionally, a time interval between any two adjacent paging early indication transmissions is greater than or equal to a transmission duration of one paging early indication transmission; and/or, the time interval between any two adjacent paging early indication transmissions is a sum of the transmission duration and an offset duration.

Optionally, the offset duration is at least one of the following:

a preset duration;
a duration configured by a system information block;
a duration configured by a radio resource control message.

Optionally, the step S1 includes:

receiving a system information block, and acquiring the configuration information according to the system information block; and/or
receiving a radio resource control message, and acquiring the configuration information according to the radio resource control message.

Optionally, the monitoring occasion locates between the start moment and an end moment, and the end moment is a moment obtained according to the time window parameter.

Optionally, the step S2 includes:
monitoring, at the monitoring occasion, a physical downlink control channel according to the transmission opportunity parameter, and receiving the paging early indication.

Optionally, the step S2 includes:

acquiring a reference signal receiving power corresponding to at least one beam;
determining a target beam according to the reference signal receiving power, and determining a target monitoring occasion corresponding to the target beam in the monitoring occasion; and
monitoring a physical downlink control channel at the target monitoring occasion, and receiving the paging early indication.

Optionally, the paging early indication is used to indicate a monitoring state of the paging occasion corresponding to a grouped terminal device.

Optionally, including at least one of the following:

the paging early indication includes a first indication bit corresponding to a group to which at least one terminal device belongs, and the first indication bit is used to indicate a monitoring state of a corresponding group to which a terminal device belongs;
the paging early indication includes a second indication bit corresponding to the at least one paging occasion, and the second indication bit is used to indicate a monitoring state of a group to which the terminal device belongs in the at least one paging occasion associated with the paging early indication; and
the paging early indication includes a third indication bit, and the third indication bit is used to indicate an independent monitoring state of at least one grouped terminal device in a corresponding paging occasion.

In a second aspect, the present application provides a processing method, applied in a terminal device, including the following steps:

S10, acquiring at least one paging early indication parameter;
S20, determining, according to the paging early indication parameter, a monitoring occasion of a paging early indication; and
S30, receiving the paging early indication according to the monitoring occasion, where the paging early indication is used to indicate whether a paging message exists in at least one paging occasion.

Optionally, the paging early indication parameter includes at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

Optionally, the number of transmission times is a number of transmission times of the paging early indication corresponding to each synchronous signal block.

Optionally, the start parameter includes at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

Optionally, a radio frame where the start moment is located, the period of the paging early indication, the number of frames of the paging early indication and an identifier of the terminal device satisfy the following conditions:

$$PEI\_SFN \bmod T1 = (T1 \operatorname{div} N1)*(UE\_ID \bmod N1),$$

PEI_SFN is the radio frame where the start moment is located, T1 is the period of the paging early indication, N1 is the number of frames of the paging early indication included in the period of the paging early indication, UE_ID is the identifier of the terminal device.

Optionally, a time interval between any two adjacent paging early indication transmissions is greater than or equal to a transmission duration of one paging early indication transmission; and/or,

the time interval between any two adjacent paging early indication transmissions is a sum of the transmission duration and an offset duration.

Optionally, the offset duration is at least one of the following:

a preset duration;
a duration configured by a system information block;
a duration configured by a radio resource control message.

Optionally, an acquiring manner of the paging early indication parameter includes at least one of the following:

acquiring from a system information block;
acquiring from a radio resource control message.

Optionally, the monitoring occasion locates between the start moment and an end moment, and the end moment is a moment obtained according to the time window parameter.

Optionally, the step S30 includes:
monitoring, at the monitoring occasion, a physical downlink control channel according to the transmission opportunity parameter, and receiving the paging early indication.

Optionally, the step S30 includes:

acquiring a reference signal receiving power corresponding to at least one beam;
determining a target beam according to the reference signal receiving power, and determining a target monitoring occasion corresponding to the target beam in the monitoring occasion; and
monitoring a physical downlink control channel at the target monitoring occasion, and receiving the paging early indication.

Optionally, the paging early indication is used to indicate a monitoring state of the paging occasion corresponding to a grouped terminal device.

Optionally, including at least one of the following:

the paging early indication includes a first indication bit corresponding to a group to which at least one terminal device belongs, and the first indication bit is used to indicate a monitoring state of a corresponding group to which a terminal device belongs;
the paging early indication includes a second indication bit corresponding to the at least one paging occasion, and the second indication bit is used to indicate a monitoring state of a group to which the terminal device belongs in the at least one paging occasion associated with the paging early indication; and

the paging early indication includes a third indication bit, and the third indication bit is used to indicate an independent monitoring state of at least one grouped terminal device in a corresponding paging occasion.

In a third aspect, the present application provides a processing method, applied in a network device, including the following steps:

S11, transmitting configuration information, where the configuration information is used to indicate a monitoring occasion of a paging early indication;
S12, transmitting the paging early indication at the monitoring occasion, where the paging early indication is used to indicate whether a paging message exists in at least one paging occasion.

Optionally, the step S11 includes:

transmitting a system information block, where the system information block includes the configuration information; and/or
transmitting a radio resource control message, where the radio resource control message includes the configuration information.

Optionally, the configuration information includes at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

Optionally, the number of transmission times is a number of transmission times of the paging early indication corresponding to each synchronous signal block.
Optionally, the start parameter includes at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

Optionally, a radio frame where the start moment is located, the period of the paging early indication, the number of frames of the paging early indication and an identifier of the terminal device satisfy the following conditions:

$$PEI\_SFN \bmod T1 = (T1 \operatorname{div} N1)*(UE\_ID \bmod N1),$$

PEI_SFN is the radio frame where the start moment is located, T1 is the period of the paging early indication, N1 is the number of frames of the paging early indication included in the period of the paging early indication, UE_ID is the identifier of the terminal device.
Optionally, a time interval between any two adjacent paging early indication transmissions is greater than or equal to a transmission duration of one paging early indication transmission; and/or, the time interval between any two adjacent paging early indication transmissions is a sum of the transmission duration and an offset duration.
Optionally, the offset duration is at least one of the following:

a preset duration;
a duration configured by the system information block;
a duration configured by the radio resource control message.

Optionally, the monitoring occasion locates between the start moment and an end moment, and the end moment is a moment obtained according to the time window parameter.
Optionally, the paging early indication is used to indicate a monitoring state of the paging occasion corresponding to a respective grouped terminal device.

Optionally, including at least one of the following:

the paging early indication includes a first indication bit corresponding to a group to which at least one terminal device belongs, and the first indication bit is used to indicate a monitoring state of a corresponding group to which a terminal device belongs;

the paging early indication includes a second indication bit corresponding to the at least one paging occasion, and the second indication bit is used to indicate a monitoring state of a group to which the terminal device belongs in the at least one paging occasion associated with the paging early indication;

the paging early indication includes a third indication bit, and the third indication bit is used to indicate an independent monitoring state of at least one grouped terminal device in a corresponding paging occasion.

In a fourth aspect, the present application provides a processing apparatus, including:

a first receiving module, configured to receive configuration information, where the configuration information is used to indicate a monitoring occasion of a paging early indication;

a second receiving module, configured to receive the paging early indication according to the monitoring occasion, where the paging early indication is used to indicate whether a paging message exists in at least one paging occasion.

Optionally, the configuration information includes at least one of the following:

a start parameter used to indicate a start monitoring occasion of the paging early indication;

a time window parameter used to indicate a duration of monitoring of the paging early indication;

a transmission opportunity parameter used to indicate a number of transmission times of the paging early indication.

Optionally, the number of transmission times is a number of transmission times of the paging early indication corresponding to each synchronous signal block.

Optionally, the start parameter includes at least one of the following:

a length of time between the at least one paging occasion and the start moment;

a length of time between adjacent paging occasions;

a length of time between any paging occasion and the start moment;

a length of time between a first paging occasion and the start moment;

an effective duration of the paging early indication;

a period of the paging early indication;

a number of frames of the paging early indication.

Optionally, a radio frame where the start moment is located, the period of the paging early indication, the number of frames of the paging early indication and an identifier of the terminal device satisfy the following conditions:

$$PEI\_SFN \bmod T1 = (T1 \text{ div } N1) * (UE\_ID \bmod N1),$$

PEI_SFN is the radio frame where the start moment is located, T1 is the period of the paging early indication, N1 is the number of frames of the paging early indication included in the period of the paging early indication, UE_ID is the identifier of the terminal device.

Optionally, a time interval between any two adjacent paging early indication transmissions is greater than or equal to a transmission duration of one paging early indication transmission; and/or, the time interval between any two adjacent paging early indication transmissions is a sum of the transmission duration and an offset duration.

Optionally, the offset duration is at least one of the following:

a preset duration;

a duration configured by a system information block;

a duration configured by a radio resource control message.

Optionally, the first receiving module is specifically configured to:

receive a system information block, and acquire the configuration information according to the system information block; and/or

receive a radio resource control message, and acquire the configuration information according to the radio resource control message.

Optionally, the monitoring occasion locates between the start moment and an end moment, and the end moment is a moment obtained according to the time window parameter.

Optionally, the second receiving module is specifically configured to:
monitor, at the monitoring occasion, a physical downlink control channel according to the transmission opportunity parameter, and receive the paging early indication.

Optionally, the second receiving module is specifically configured to:

acquire a reference signal receiving power corresponding to at least one beam;
determine a target beam according to the reference signal receiving power, and determine a target monitoring occasion corresponding to the target beam in the monitoring occasion; and
monitor a physical downlink control channel at the target monitoring occasion, and receive the paging early indication.

Optionally, the paging early indication is used to indicate a monitoring state of the paging occasion corresponding to a grouped terminal device.

Optionally, including at least one of the following:

the paging early indication includes a first indication bit corresponding to a group to which at least one terminal device belongs, and the first indication bit is used to indicate a monitoring state of a corresponding group to which a terminal device belongs;
the paging early indication includes a second indication bit corresponding to the at least one paging occasion, and the second indication bit is used to indicate a monitoring state of a group to which the terminal device belongs in the at least one paging occasion associated with the paging early indication;
the paging early indication includes a third indication bit, and the third indication bit is used to indicate an independent monitoring state of at least one grouped terminal device in a corresponding paging occasion.

In a fifth aspect, the present application provides a processing apparatus, including:

an acquiring module, configured to acquire at least one paging early indication parameter;
a determining module, configured to determine, according to the paging early indication parameter, a monitoring occasion of a paging early indication;
a receiving module, configured to receive the paging early indication according to the monitoring occasion, where the paging early indication is used to indicate whether a paging message exists in at least one paging occasion.

Optionally, the paging early indication parameter includes at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

Optionally, the number of transmission times is a number of transmission times of the paging early indication corresponding to each synchronous signal block.

Optionally, the start parameter includes at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

Optionally, a radio frame where the start moment is located, the period of the paging early indication, the number of frames of the paging early indication and an identifier of the terminal device satisfy the following conditions:

$$PEI\_SFN \bmod T1 = (T1 \operatorname{div} N1)*(UE\_ID \bmod N1),$$

PEI_SFN is the radio frame where the start moment is located, T1 is the period of the paging early indication, N1 is the number of frames of the paging early indication included in the period of the paging early indication, UE_ID is the identifier of the terminal device.

Optionally, a time interval between any two adjacent paging early indication transmissions is greater than or equal to a transmission duration of one paging early indication transmission; and/or,

the time interval between any two adjacent paging early indication transmissions is a sum of the transmission duration and an offset duration.

Optionally, the offset duration is at least one of the following:

a preset duration;
a duration configured by a system information block;
a duration configured by a radio resource control message.

Optionally, an acquiring manner of the paging early indication parameter includes at least one of the following:

acquiring from a system information block;
acquiring from a radio resource control message.

Optionally, the monitoring occasion locates between the start moment and an end moment, and the end moment is a moment obtained according to the time window parameter.

Optionally, the receiving module is specifically configured to:

monitor, at the monitoring occasion, a physical downlink control channel according to the transmission opportunity parameter, and receive the paging early indication.

Optionally, the receiving module is specifically configured to:

acquire a reference signal receiving power corresponding to at least one beam;
determine a target beam according to the reference signal receiving power, and determine a target monitoring occasion corresponding to the target beam in the monitoring occasion;
monitor a physical downlink control channel at the target monitoring occasion, and receive the paging early indication.

Optionally, the paging early indication is used to indicate a monitoring state of the paging occasion corresponding to a grouped terminal device.

Optionally, including at least one of the following:

the paging early indication includes a first indication bit corresponding to a group to which at least one terminal device belongs, and the first indication bit is used to indicate a monitoring state of a corresponding group to which a terminal device belongs;
the paging early indication includes a second indication bit corresponding to the at least one paging occasion, and the second indication bit is used to indicate a monitoring state of a group to which the terminal device belongs in the at least one paging occasion associated with the paging early indication;
the paging early indication includes a third indication bit, and the third indication bit is used to indicate an independent monitoring state of at least one grouped terminal device in a corresponding paging occasion.

In a sixth aspect, the present application provides a processing apparatus, including:

a first transmitting module, configured to transmit configuration information, where the configuration information is used to indicate a monitoring occasion of a paging early indication;
a second transmitting module, configured to transmit the paging early indication at the monitoring occasion, where the paging early indication is used to indicate whether a paging message exists in at least one paging occasion.

Optionally, the first transmitting module is specifically configured to:

transmit a system information block, where the system information block includes the configuration information; and/or
transmit a radio resource control message, where the radio resource control message includes the configuration information.

Optionally, the configuration information includes at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

Optionally, the number of transmission times is a number of transmission times of the paging early indication corresponding to each synchronous signal block.
Optionally, the start parameter includes at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

Optionally, a radio frame where the start moment is located, the period of the paging early indication, the number of frames of the paging early indication and an identifier of the terminal device satisfy the following conditions:

$$PEI\_SFN \bmod T1 = (T1 \operatorname{div} N1)*(UE\_ID \bmod N1),$$

PEI_SFN is the radio frame where the start moment is located, T1 is the period of the paging early indication, N1 is the number of frames of the paging early indication included in the period of the paging early indication, UE_ID is the identifier of the terminal device.
Optionally, a time interval between any two adjacent paging early indication transmissions is greater than or equal to a transmission duration of one paging early indication transmission; and/or, the time interval between any two adjacent paging early indication transmissions is a sum of the transmission duration and an offset duration.
Optionally, the offset duration is at least one of the following:

a preset duration;
a duration configured by the system information block;
a duration configured by the radio resource control message.

Optionally, the monitoring occasion locates between the start moment and an end moment, and the end moment is a moment obtained according to the time window parameter.
Optionally, the paging early indication is used to indicate a monitoring state of the paging occasion corresponding to a respective grouped terminal device.
Optionally, including at least one of the following:

the paging early indication includes a first indication bit corresponding to a group to which at least one terminal device belongs, and the first indication bit is used to indicate a monitoring state of a corresponding group to which a terminal device belongs;
the paging early indication includes a second indication bit corresponding to the at least one paging occasion, and the second indication bit is used to indicate a monitoring state of a group to which the terminal device belongs in the at least one paging occasion associated with the paging early indication;
the paging early indication includes a third indication bit, and the third indication bit is used to indicate an independent monitoring state of at least one grouped terminal device in a corresponding paging occasion.

In a seventh aspect, the present application provides a communication system, including:

a terminal device configured to execute the method according to the first aspect to the second aspect;
a network device configured to execute the method according to the third aspect.

In an eighth aspect, the present application provides a communication device, including: a memory and a processor;

the memory is configured to store a program instruction;
the processor is configured to call the program instruction in the memory to execute the processing method according to any one of the first aspect to the third aspect.

In a ninth aspect, the present application provides a computer-readable storage medium, where the storage medium stores a computer program; when the computer program is executed, the processing method according to any one of the first aspect to the third aspect is implemented.

According to the processing method, the communication device, the communication system and the storage medium provided by the present application, a terminal device first receives configuration information transmitted by a network device, where the configuration information is used to indicate a monitoring occasion of a paging early indication, and then the terminal device receives the paging early indication according to the monitoring occasion, where the paging early indication is used to indicate whether a paging message exists in at least one paging occasion. When the success rate of receiving paging early indication is low under the conditions of conflict between PEI and high-priority services, missed detection of paging early indication, poor channel environment, etc., the monitoring occasion of the paging early indication is increased through the configuration information, so as to improve the success rate of receiving the paging early indication, so that the problem that delay in data transmission is finally incurred due to wake-up delay of the terminal device which is resulted from failure in receiving the paging early indication can be reduced.

**BRIEF DESCRIPTION OF DRAWINGS**

The drawings herein are incorporated into the specification and constitute a part of the specification, which illustrate embodiments consistent with the present application, and together with the specification, serve to describe the principle of the present application. In order to describe the technical solution of the embodiment of the present application more clearly, in the following, the drawings needed in the description of the embodiments will be introduced briefly. Obviously, it is obvious to those skilled in the art that other drawings can be obtained according to these drawings without making creative efforts.

FIG. 1 is a schematic hardware structural diagram of a terminal device provided by an embodiment of the present application.
FIG. 2 is an architecture diagram of a communication network system provided by an embodiment of the present application.
FIG. 3 is a schematic signaling interaction diagram 1 of the processing method provided by an embodiment of the present application.
FIG. 4 is a schematic diagram of a paging early indication and a paging occasion provided by an embodiment of the present application.
FIG. 5 is a schematic diagram of a monitoring occasion of PEI provided by an embodiment of the present application.
FIG. 6 is a schematic diagram 1 of determining a start moment provided by an embodiment of the present application.
FIG. 7 is a schematic diagram 2 of determining a start moment provided by an embodiment of the present application.
FIG. 8 is a schematic diagram 3 of determining a start moment provided by an embodiment of the present application.
FIG. 9 is a schematic diagram of PEI transmission provided by an embodiment of the present application.
FIG. 10 is a schematic diagram 1 of PEI monitoring provided by an embodiment of the present application.
FIG. 11 is a schematic diagram 2 of PEI monitoring provided by an embodiment of the present application.
FIG. 12 is a schematic diagram of a first indication bit included in a PEI provided by an embodiment of the present application.
FIG. 13 is a schematic signaling interaction diagram 2 of a processing method provided by an embodiment of the present application.
FIG. 14 is a schematic structural diagram 1 of a processing apparatus provided by an embodiment of the present application.
FIG. 15 is a schematic structural diagram 2 of a processing apparatus provided by an embodiment of the present application.
FIG. 16 is a schematic structural diagram 3 of a processing apparatus provided by an embodiment of the present application.
FIG. 17 is a schematic structural diagram of a communication device provided by an embodiment of the present application.

The implementation, functional characteristics and advantages of the purpose of the present application will be further described with reference to the accompanying drawings in combination with the embodiments. Through the above drawings, specific embodiments of the present application have been shown, which will be described in more detail later. These drawings and text descriptions are not intended to limit the scope of the concept of the present application in any way, but to describe the concept of the present application to those skilled in the art by referring to specific embodiments.

## DESCRIPTION OF EMBODIMENTS

Illustrative embodiments will be described in detail herein, examples of which are shown in the accompanying drawings. When the following description refers to the drawings, unless otherwise indicated, the same numbers in different drawings indicate the same or similar elements. The embodiments described in the following illustrative embodiments do not represent all the embodiments consistent with the present application. On the contrary, they are only examples of apparatuses and methods consistent with some aspects of the present application as explicitly described in the appended set of claims.

It should be noted that, the terms "including", "containing" or any other variation thereof is intended to cover non-exclusive inclusion, so that a process, method, object or apparatus that includes a series of elements not only includes those elements, but also includes other elements not explicitly listed, or also includes elements inherent to such process, method, object or apparatus. Without further restrictions, the element defined by the statement of "including one ......" does not exclude the existence of other identical elements in the process, method, object or apparatus that includes the element. In addition, the components, features and elements with the same name in different embodiments of the present application may have the same meaning or different meanings, and the specific meaning should be determined according to their description in the specific embodiment or further combined with the context in the specific embodiment.

It should be understood that although the terms first, second, third, etc., may be used herein to describe various information, these information should not be limited to these terms. These terms are only used to distinguish the same type of information from each other. For example, without departing from the scope of the present application, the first information can also be called the second information, and similarly, the second information can also be called the first information. Depending on the context, the word "if" as used here can be interpreted as "when" or "in a case of" or "in response to a determination". Furthermore, as used herein, singular forms "a", "an" and "the" are intended to also include plural forms, unless the context indicates otherwise. It should be further understood that the terms "including" and "include" indicate the presence of stated features, steps, operations, elements, components, items, categories, and/or groups, but do not exclude the presence, appearance or addition of one or more other features, steps, operations, elements, components, items, categories, and/or groups. The terms "or", "and/or" and "including at least one of the following" used in the present application can be interpreted as inclusive or mean any one or any combination. For example, "including at least one of the following: A, B, C" means "any one of the following: A, B, C; A and B; A and C; B and C; and A, B and C", for another example, "A, B or C" or "A, B and/or C" means "any one of the following: A, B, C; A and B; A and C; B and C; and A, B and C". Exceptions to this definition only occur when the combination of elements, functions, steps or operations are inherently mutually exclusive in some way.

It should be understood that although the steps in the flowchart in the embodiment of the present application are shown in sequence as indicated by the arrow, these steps are not necessarily executed in sequence as indicated by the arrow. Unless explicitly stated herein, the execution of these steps is not strictly limited in order, and it can be executed in other order. Moreover, at least a part of the steps in the figure may include a plurality of sub-steps or stages. These sub-steps or stages may not necessarily be completed at the same time, but may be executed at different times, and the execution order may not necessarily be sequential, but may be alternately executed with other steps or at least a part of sub-steps or stages of other steps.

Depending on the context, the word "if" as used here can be interpreted as "when" or "in a case of" or "in response to a determination" or "in response to a detection". Similarly, depending on the context, the phrases "if determined" or "if detected (a stated condition or event)" can be interpreted as "when determined" or "in response to a determination" or "when detected (a stated condition or event)" or "in response to detection (a stated condition or event)".

It should be noted that in the present application, step codes such as S1, S2, etc., are adopted to express the corresponding contents more clearly and simply, and do not constitute a substantial restriction on the sequence. In specific implementations, those skilled in the art may execute S2 first and then S1, etc., but these are all within the scope of protection of the present application.

It should be understood that the specific embodiments described here are only used to describe the present application, and are not used to limit the present application.

In the following description, suffixes such as "module", "component" or "unit" used to represent elements are only used to facilitate the description of the present application, and have no specific meaning in themselves. Thus, "module", "component" or "unit" can be used in combination.

An intelligent terminal can be implemented in various forms. For example, the intelligent terminal described in the present application can include an intelligent terminal such as a mobile phone, a tablet computer, a notebook computer, a palm computer, a personal digital assistant (Personal Digital Assistant, PDA), a portable media player (Portable Media Player, PMP), a navigation device, a wearable device, a smart bracelet, a pedometer, and a fixed terminal such as a digital TV or a desktop computer.

In the following description, the terminal device will be taken as an example, and those skilled in the art will understand that the configuration according to the embodiments of the present application can also be applied to fixed type terminals in addition to elements specially used for mobile purposes.

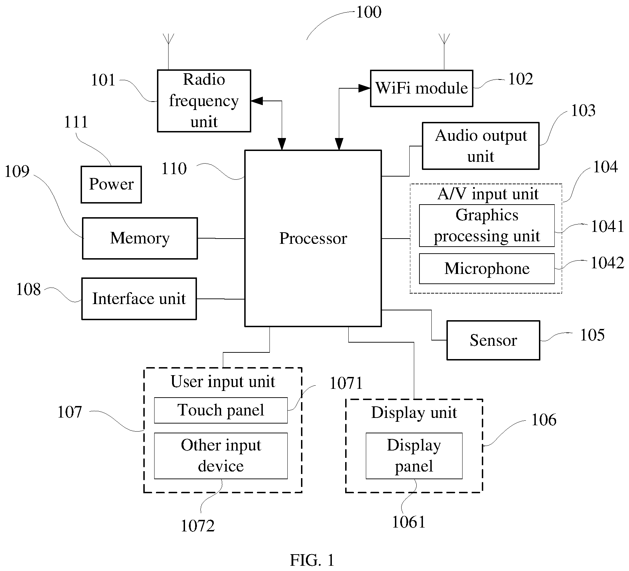

Referring to FIG. 1, FIG. 1 is a schematic hardware structural diagram of a terminal device for implementing the respective embodiments of the present application, and the terminal device 100 may include: components such as a RF (Radio Frequency, radio frequency) unit 101, a WiFi module 102, an audio output unit 103, an A/V (audio/video) input unit 104, a sensor 105, a display unit 106, a user input unit 107, an interface unit 108, a memory 109, a processor 110, and a power 111, etc. It can be understood by those skilled in the art that the structure of the terminal device as shown in FIG. 1 does not constitute a limitation on the terminal device, and the terminal device may include more or less components than those shown in the figure, or combine some components, or have different component arrangements.

With reference to FIG. 1, each component of the terminal device will be specifically introduced below.

The radio frequency unit 101 can be used for receiving and transmitting signals in the process of transmitting and receiving information or calling process, and optionally, after receiving downlink information of a base station, giving the downlink information to the processor 110 for processing; in addition, transmitting uplink data to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The wireless communication can use any communication standard or protocol, including but not limited to GSM (Global System for Mobile Communication, global system for mobile communication), GPRS (General Packet Radio Service, general packet radio service), CDMA2000 (Code Division Multiple Access 2000, code division multiple access 2000), WCDMA (Wideband Code Division Multiple Access, wideband code division multiple access), TD-SCDMA (Time Division-Synchronous Code Division Multiple Access, time division-synchronous code division multiple access), FDD-LTE (Frequency Division Duplexing-Long Term Evolution, frequency division multiplexing-long term evolution), TDD-LTE (Time Division Duplex-Long Term Evolution, time division duplex-long term evolution) and 5G, etc.

WiFi is a short-distance wireless transmission technology. The terminal device can help users to transmit and receive emails, browse web pages and access streaming media through the WiFi module 102, which provides users with wireless broadband Internet access. Although the WiFi module 102 is shown in FIG. 1, it can be understood that it is not a necessary component of the terminal device, and it can be completely omitted as required within the meaning of not changing the essence of the invention.

The audio output unit 103 can convert the audio data received by the radio frequency unit 101 or the WiFi module 102 or stored in the memory 109 into an audio signal and output the audio signal as sound when the terminal device 100 is in a call signal receiving mode, a conversation mode, a recording mode, a voice recognition mode, a broadcast receiving mode and the like. Furthermore, the audio output unit 103 can also provide audio output related to a specific function performed by the terminal device 100 (e.g., sound received from a call signal, sound received from message, etc.). The audio output unit 103 may include a loudspeaker, a buzzer, etc.

The A/V input unit 104 is used to receive audio or video signals. The A/V input unit 104 may include a graphics processing unit (Graphics Processing Unit, GPU) 1041 and a microphone 1042. The graphics processing unit 1041 processes image data of still pictures or videos obtained by an image capturing apparatus (such as a camera) in a video capturing mode or an image capturing mode. The processed image frame can be displayed on the display unit 106. The image frames processed by the graphics processing unit 1041 can be stored in the memory 109 (or other storage mediums) or transmitted via the radio frequency unit 101 or the WiFi module 102. The microphone 1042 can receive sound (audio data) via the microphone 1042 in operation modes such as a telephone conversation mode, a recording mode, a voice recognition mode, etc., and can process such sound into audio data. The processed audio (voice) data can be converted into a format which can be transmitted to the mobile communication base station via the radio frequency unit 101 in the case of telephone conversation mode to output. The microphone 1042 can implement various types of noise cancellation (or suppression) algorithms to cancel (or suppress) noise or interference generated in the process of receiving and transmitting audio signals.

The terminal device 100 also includes at least one sensor 105, such as a light sensor, a motion sensor, and other sensors. Optionally, the light sensor includes an ambient light sensor and a proximity sensor. Optionally, the ambient light sensor can adjust the brightness of the display panel 1061 according to the brightness of the ambient light, and the proximity sensor can turn off the display panel 1061 and/or the backlight when the terminal device 100 moves to the ear. As a kind of motion sensor, an accelerometer sensor can detect the accelerations in all directions (generally three-axis), and can detect the magnitude and direction of gravity when static, which can be used in applications for recognizing a posture of the mobile phone (such as screen switching, related games, magnetometer posture calibration), vibration recognition related functions (such as pedometer, tapping), etc.; as for other sensors, such as fingerprint sensor, pressure sensor, iris sensor, molecular sensor, gyroscope, barometer, hygrometer, thermometer, infrared sensor, etc., which can be configured on mobile phones, description will not be made here for the sake of brevity.

The display unit 106 is used to display information input by the user or provided to the user. The display unit 106 may include a display panel 1061, which can be configured in forms of liquid crystal display (Liquid Crystal Display), organic light-emitting diode (Organic Light-Emitting Diode, OLED), etc.

The user input unit 107 may be used to receive input digit or character information, and generate key signal input relating to user setting and function control of the terminal device. Optionally, the user input unit 107 may include a touch panel 1071 and other input devices 1072. The touch panel 1071 is also called a touch screen, which can collect user's touch operations on or near the touch panel 1071 (such as the user's operation on or near the touch panel 1071 by using any suitable object or accessory such as finger, touch pen, etc.), and drive the corresponding connection apparatuses according to a preset program. The touch panel 1071 can include a touch detection apparatus and a touch controller. Optionally, the touch detection apparatus detects the touch orientation of the user, detects a signal brought by the touch operation, and transmits the signal to the touch controller; the touch controller receives touch information from the touch detection apparatus, converts touch information into contact coordinates, and transmits the contact coordinates to the processor 110, and can receive and execute commands transmitted by the processor 110. In addition, the touch panel 1071 can be implemented in various types such as resistive, capacitive, infrared and surface acoustic wave. In addition to the touch panel 1071, the user input unit 107 may also include other input devices 1072. Optionally, the other input devices 1072 may include, but are not limited to, one or more of physical keyboard, function keys (such as volume control keys, switch keys, etc.), a trackball, a mouse, a joystick, etc., which are not specifically limited here.

Optionally, the touch panel 1071 can cover the display panel 1061, and when detecting a touch operation on or near it, the touch panel 1071 transmits the touch operation to the processor 110 to determine a type of a touch event, and then the processor 110 provides corresponding visual output on the display panel 1061 according to the type of the touch event. Although in FIG. 1, the touch panel 1071 and the display panel 1061 are two independent components to realize the input and output functions of the terminal device, in some embodiments, the touch panel 1071 and the display panel 1061 can be integrated to implement the input and output functions of the terminal device, which is not specifically limited here.

The interface unit 108 serves as an interface through which at least one external apparatus can be connected to the terminal device 100. For example, the external apparatus may include a wired or wireless headset port, an external power supply (or battery charger) port, a wired or wireless data port, a memory card port, a port for connecting an apparatus with an recognizing module, an audio input/output (I/O) port, a video I/O port, an earphone port, and the like. The interface unit 108 may be used to receive input (e.g., data information, power, etc.) from an external apparatus and transmit the received input to one or more components within the terminal device 100 or may be used to transmit data between the terminal device 100 and the external apparatus.

The memory 109 may be used to store a software program and various data. The memory 109 may mainly include a program storage section and a data storage section. Optionally, the program storage section may store an operating system, application programs required by at least one function (such as a sound playing function, an image playing function, etc.), etc., and the data storage area can store data created according to the use of the mobile phone (such as audio data, phone book, etc.). In addition, the memory 109 may include a high-speed random access memory and a non-volatile memory, such as at least one disk memory component, a flash memory component, or other volatile solid-state memory component.

The processor 110 is the control center of the terminal device, which connects respective parts of the whole terminal device with various interfaces and lines, executes various functions of the terminal device and processes data by running or executing software programs and/or modules stored in the memory 109 and calling the data stored in the memory 109, so as to wholly monitor the terminal device. The processor 110 may include one or more processing units; preferably, the processor 110 can integrate an application processor and a modem processor, and optionally, the application processor mainly processes the operating system, user interface and application programs, etc., and the modem processor mainly processes wireless communication. It can be understood that the above modem processor may not be integrated into the processor 110.

The terminal device 100 may further include a power supply 111 (such as a battery) for supplying power to various components, and preferably, the power supply 111 may be logically connected to the processor 110 through a power management system, so as to realize the functions of managing charging, discharging, and power consumption management through the power management system.

Although not shown in FIG. 1, the terminal device 100 may also include a Bluetooth module and the like, which will not be described here.

In order to facilitate understanding of the embodiments of the present application, the communication network system on which the terminal device of the present application is based will be described below.

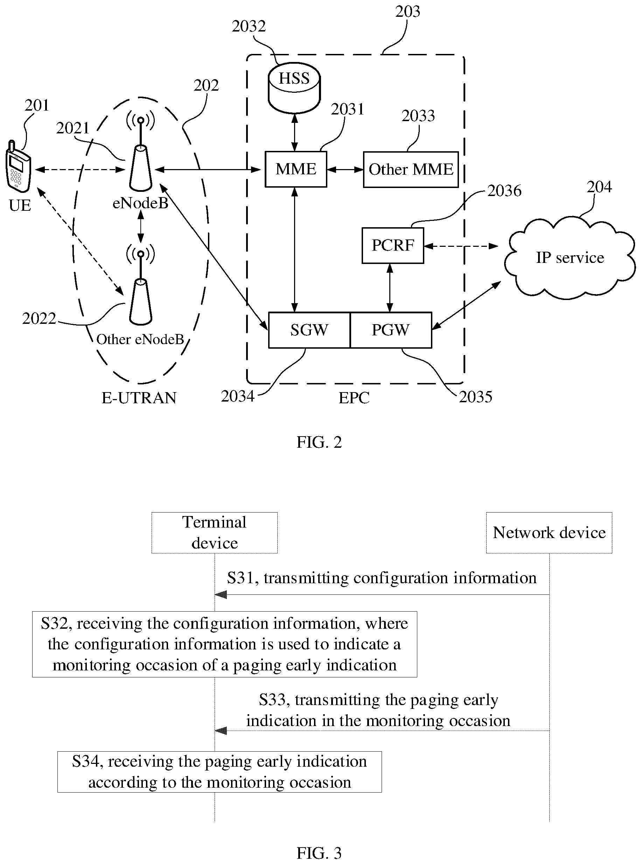

Referring to FIG. 2, FIG. 2 is an architecture diagram of a communication network system provided by the embodiment of the present application. The communication network system is an LTE system with universal mobile communication technology, and the LTE system includes a UE (User Equipment, user equipment) 201, an E-UTRAN (Evolved UMTS Terrestrial Radio Access Network, evolved UMTS terrestrial radio access network) 202, an EPC (Evolved Packet Core, evolved packet core network) 203 and IP services 204 of operators.

Optionally, UE 201 may be the above-mentioned terminal device 100, which will not be repeated here.

The E-UTRAN 202 includes an eNodeB 2021 and other eNodeB 2022, etc. Optionally, the eNodeB 2021 can be connected to the other eNodeB 2022 through a backhaul (backhaul) (such as an X2 interface), and the eNodeB 2021 is connected to the EPC 203, and the eNodeB 2021 may provide an access from the UE 201 to the EPC 203.

The EPC 203 may include an MME (Mobility Management Entity, mobility management entity) 2031, an HSS (Home Subscriber Server, home subscriber server) 2032, other MME 2033, an SGW (Serving Gate Way, serving gate way) 2034, a PGW (PDN Gate Way, PDN gate way) 2035, a PCRF (Policy and Charging Rules Function, policy and charging rules function) 2036, etc. Optionally, the MME 2031 is a control node that handles signaling between the UE 201 and the EPC 203, and provides bearer and connection management. The HSS 2032 is used to provide some registers to manage functions such as home location registers (not shown in the figure), and holds some user-specific information about service features, data rates, etc. All user data can be transmitted through the SGW 2034, and the PGW 2035 can provide IP address allocation and other functions of the UE 201. The PCRF 2036 is a strategy decision point of the strategy and charging control of service data flow and IP bearer resources, which selects and provides available strategies and charging control decisions for the strategy and charging execution function unit (not shown in the figure).

The IP services 204 may include the Internet, intranet, IMS (IP Multimedia Subsystem, IP multimedia subsystem) or other IP services.

Although the LTE system has been described as an example, those skilled in the art should know that the present application is not only applicable to the LTE system, but also applicable to other wireless communication systems, such as GSM, CDMA2000, WCDMA, TD-SCDMA and future new network systems (such as 5G) etc., which is not limited here.

Based on the above-mentioned hardware structure of terminal device and communication network system, various embodiments of the present application are proposed.

FIG. 3 is a schematic signaling interaction diagram 1 of a processing method provided by an embodiment of the present application. As shown in FIG. 3, the method may include:

S31, a network device transmits configuration information, where the configuration information is used to indicate a monitoring occasion of a paging early indication.

The paging early indication is used to inform a terminal device of whether a paging message exists in a corresponding paging occasion (PO), and one paging early indication may be associated with one or more POs. If the terminal device receives the paging early indication successfully, the terminal device can know whether a paging message exists in the associated PO according to the paging early indication.

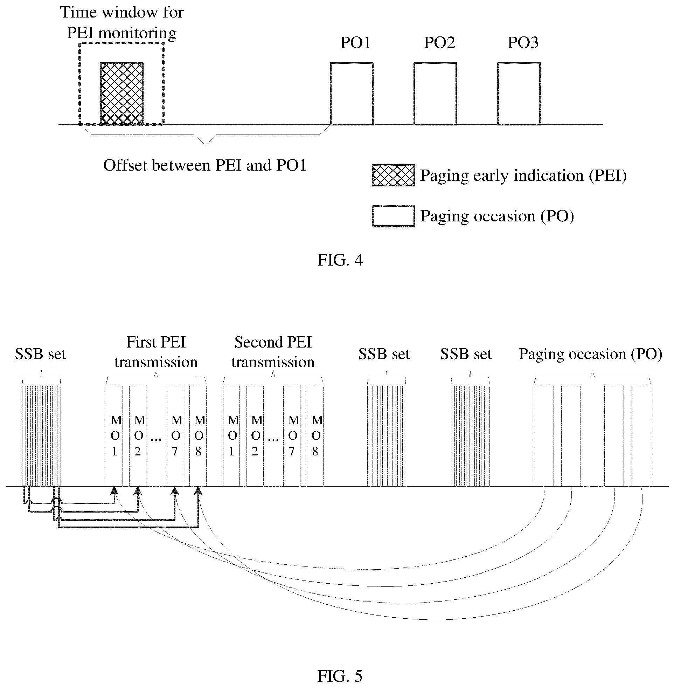

FIG. 4 is a schematic diagram of a paging early indication and a paging occasion provided by an embodiment of the present application. As shown in FIG. 4, one PEI associated with three POs is shown, which are PO1, PO2 and PO3 respectively. After configuring PEI for the terminal device, the network device also configures a PEI monitoring time window and a time offset between PEI and PO. The PEI monitoring time window is shown in FIG. 4 with dotted lines, and the PEI monitoring time window indicates a duration of PEI transmission, and the PEI is transmitted within the duration. FIG. 4 illustratively shows the time offset between the PEI and PO1, where the time offset is a length of time between start moments between PO1 and PEI monitoring. The terminal device can determine a start moment of PEI monitoring according to the time offset between the PEI and PO1. Then, the terminal device determines an end moment of PEI monitoring according to the start moment of the PEI monitoring and the duration corresponding to the PEI monitoring time window.

In some cases, the terminal device may not be able to receive the PEI. For example, when the PEI conflicts with the high-priority service, the terminal device will choose to give priority to the high-priority service and discard the PEI; for example, when the terminal device miss-detects PEI; another example is the poor channel environment of the terminal device, which leads to a low success rate of PEI analysis, and so on.

If the terminal device cannot successfully receive PEI, it will delay the wake-up of the terminal device, thus affecting data transmission. In order to improve the success rate of PEI reception, in the embodiment of the present application, before transmitting the paging early indication, the network device may first transmit configuration information to the terminal device to indicate a PEI monitoring occasion.

The PEI monitoring occasion may include a start moment of PEI transmission, or may include an end moment of PEI transmission, a duration of PEI transmission, or the number of transmission times of the PEI, etc.

S32, the terminal device receives the configuration information.

After the network device transmits the configuration information to the terminal device, the terminal device can receive the configuration information. The configuration information may include at least one of the start moment of the PEI transmission, the duration of the PEI transmission, the number of transmission times of the PEI, and the terminal device can acquire the monitoring occasion according to the configuration information.

For example, when the configuration information includes the start moment of the PEI transmission, the terminal devices can determine the start moment of the PEI monitoring; when the configuration information includes the end moment of the PEI transmission, the terminal device can determine the end moment of the PEI monitoring; and/or, when the configuration information includes the duration of the PEI transmission, the terminal device can determine the duration of the PEI monitoring; and/or, when the configuration information includes the number of transmission times of the PEI, the terminal device can determine the number of times for monitoring PEI for a same beam. The number of transmission times of the PEI is at least once, and optionally, the number of transmission times may be once, or may be multiple times.

S33, the network device transmits the paging early indication in the monitoring occasion.

After indicating the PEI monitoring occasion to the terminal device through the configuration information, the network device may transmit the PEI to the terminal device in the monitoring occasion. Optionally, the PEI may be associated to one PO, or may be associated to multiple POs. The number of transmission times that the network device transmits PEI to the terminal device in the monitoring occasion may be once or multiple times. Optionally, the number of transmission times is a positive integer greater than or equal to 2.

S34, the terminal device receives the paging early indication according to the monitoring occasion.

The paging early indication is used to indicate whether a paging message exists in at least one paging occasion. After determining the PEI monitoring occasion according to the configuration information, the terminal device may receive the PEI in the monitoring occasion. For example, when the monitoring occasion includes the start moment of the PEI monitoring, the terminal device can start to monitor the PEI carried in the manner of DCI mapping (DCI-based PEI) from the start moment; and/or, when the monitoring occasion includes the duration of the PEI monitoring, the terminal device can determine the end moment of the PEI monitoring according to the start moment and the duration, and the terminal device can terminate the monitoring when the end moment is reached, or the terminal device can also terminate the PEI monitoring in the subsequent PEI monitoring occasion after the terminal device successfully decodes one PEI; as the network device may transmit the PEI to the terminal device for once or multiple times in the monitoring occasion, the terminal device can receive the PEI for once or multiple times in the monitoring occasion according to the number of transmission times. Optionally, the number of transmission times for transmitting the PEI is a positive integer greater than or equal to 2. For example, when the number of transmission times of the PEI is 2, the terminal device may perform PEI monitoring for two times. Compared to single-time PEI monitoring, multiple-time PEI reception can increase the success rate of reception.

For example, when the number of transmission times of the PEI is one, if the terminal device is processing high-priority services, the PEI conflicts with the high-priority services, and at this time, the terminal device may choose to discard the PEI to process the high-priority services first, and the terminal device fails to receive the PEI. And/or, when the number of transmission times of the PEI is greater than one, even if confliction with the high-priority services occurs in one transmission process of the PEI, the terminal device can also receive the PEI in other transmission opportunities, thus increasing the success rate of PEI reception in the case that the PEI transmission conflicts with the high-priority services.

For example, when the number of transmission times of the PEI is one, if the terminal device miss-detects the PEI, the terminal devices fails to receive the PEI. And/or, when the number of transmission times of the PEI is greater than one, even if miss-detection occurs in one transmission process of the PEI, the terminal device can also receive the PEI in other transmission opportunities, thus increasing the success rate of PEI reception in the case of PEI miss-detection.

For example, when the number of transmission times of the PEI is one, the poor channel environment leads to a low success rate of PEI analysis, and further leads to that the terminal device fails to receive the PEI. And/or, when the number of transmission times of the PEI is greater than one, even if PEI analysis failure occurs in one transmission process of the PEI, the terminal device can also successfully analyze the PEI in other transmission opportunities, or can even combine PEIs in multiple transmissions, thus increasing the success rate of PEI reception in the case of poor channel environment.

That is, configuring more than one transmission time for PEI transmission in the monitoring occasion can increase the success rate of PEI reception, reduce the problem that delay in data transmission is finally incurred due to wake-up delay of the terminal device which is resulted from failure in receiving the paging early indication.

The network device can indicate the PEI monitoring occasion to the terminal device through the configuration information, that is, the network device transmits the configuration information to the terminal device, and the terminal device determines the PEI monitoring occasion according to the configuration information.

Optionally, the configuration information is independent information, that is, the configuration information is not carried on other information or information on signaling, and the network device directly transmits the configuration information to the terminal device.

Optionally, the configuration information is information carried on a system information block (System Information Block, SIB), that is, the manner that the network device transmits the configuration information to the terminal device could be: the network device transmits a system information block to the terminal device, and the system information block includes the configuration information; after receiving the system information block from the network device, the terminal device acquires the configuration information from the system information block.

Optionally, the configuration information is information carried on a radio resource control (Radio Resource Control, RRC) message, that is, the manner that the network device transmits the configuration information to the terminal device could be: the network device transmits an RRC message to the terminal device, and the RRC message includes the configuration information; after receiving the RRC message from the network device, the terminal device acquires the configuration information according to the RRC message.

The configuration information is used to indicate the PEI monitoring occasion, and the configuration information includes at least one paging early indication parameter, and the PEI monitoring occasion can be determined according to the paging early indication parameter.

Optionally, the configuration information may include at least one of a start parameter, a time window parameter, and a transmission opportunity parameter. The start parameter is used to indicate a start moment of the PEI monitoring, that is, the start parameter indicates when does the terminal device start to monitor the PEI. The time window parameter is used to indicate a duration of the PEI monitoring, that is, the time window parameter indicates how long does the terminal device need to keep monitoring the PEI. The transmission opportunity parameter indicates the number of transmission times of the PEI, and the transmission opportunity parameter takes a value of positive integer, and the number of transmission times of the PEI indicated by the transmission opportunity parameter may be once or multiple times.

Optionally, the start parameter includes at least one of the following: a length of time between at least one paging occasion and the start moment; a length of time between adjacent paging occasions; a length of time between any paging occasion and the start moment; a length of time between the first paging occasion and the start moment; an effective duration of the paging early indication; a period of the paging early indication; the number of frames of the paging early indication. The start moment of the PEI monitoring can be determined according to one or more of the above.

FIG. 5 is a schematic diagram of a monitoring occasion of PEI provided by an embodiment of the present application. As shown in the rightmost part of FIG. 5, there are paging occasions corresponding to respective beams in a target paging occasion. A synchronization signal block set (Synchronization Signal and PBCH block set, SSB set) includes transmission occasions of the respective beams, which is also called transmission occasions of respective SSBs.

PEIs also corresponds to beams one by one. Two times of PEI transmissions are illustratively shown in FIG. 5, and each time of PEI transmission includes 8 monitoring occasions (monitor occasion, MO) (part of which is omitted in the figure), which are also called 8 monitor opportunities. It is assumed that there are three SSB sets before the paging occasion, and each SSB set has 8 SSB transmission opportunities, that is, there are 8 beams, then PEI MO1 represents a PEI monitoring occasion associated with SSB#0 (representing the first beam of the SSB set), PEI MO2 represents a PEI monitoring occasion associated with SSB#1 (representing the second beam of the SSB set), and PEI MO3 represents a PEI monitoring occasion associated with SSB#2 (representing the third beam of the SSB set), and so on.

Optionally, the number of transmission times indicated by the transmission opportunity parameter is the number of transmission times of the PEI corresponding to each SSB. Taking that the SSB set has 8 SSBs as an example, 8 SSBs correspond to 8 beams, and each beam corresponds to one PDCCH. Since the terminal device may only receive part of the 8 beams, and cannot receive all of the beams, the PEI corresponding to each beam needs to be transmitted in one PEI transmission. For each transmission, the PEI is repeatedly transmitted in the 8 different SSB directions, that is, the PEI corresponding to the 8 beams is transmitted repeatedly. In one PEI transmission, repeated transmission of the PEI corresponding to each beam is included, hence 8 monitoring occasions of the PEI are included in one PEI transmission.

For example, as shown in FIG. 5, for the first PEI transmission, 8 SSBs correspond to 8 beams, and also correspond to 8 monitoring occasions of PEI. PEI MO1, PEI MO2, ..., PEI MO7, PEI MO8 refer to that the PEI is repeatedly transmitted in 8 different SSB directions. The content of the PEI MO1, PEI MO2, ..., PEI MO7, PEI MO8 is completely the same, but the corresponding beams or SSBs are different. That is, PEI MO1 corresponds to a beam 1, PEI MO2 corresponds to a beam 2, PEI MO3 corresponds to a beam 3, ..., PEI MO8 corresponds to a beam 8. It is the same for the second PEI transmission, PEI MO1, PEI MO2, ..., PEI MO7, PEI MO8 refer to that the PEI is repeatedly transmitted in 8 different SSB directions.

The number of transmission times indicated by the transmission opportunity parameter is the number of transmission times of the PEI corresponding to each SSB. It is assumed that SSB set has 8 SSBs, and the 8 SSBs correspond to 8 beams, and the 8 SSBs are SSB1, SSB2, ..., SSB8. For each SSB, the number of transmission times of the corresponding PEI is the number of transmission times R indicated by the transmission opportunity parameter. For example, in FIG. 5, taking R=2 as an example. For SSB1, the number of transmission times of the PEI corresponding to SSB1 is 2, that is, PEI MO1 in the first PEI transmission, and PEI MO1 in the second PEI transmission; for SSB2, the number of transmission times of the PEI corresponding to SSB2 is 2, that is, PEI MO2 in the first PEI transmission, PEI MO2 in the second PEI transmission, and so on. For any bean or SSB, the number of transmission times of the PEI corresponding to the beam or the SSB is the number of transmission times R indicated by the transmission opportunity, and R is an integer greater than or equal to 1.

In the above embodiment, 8 SSBs (8 beams) are taken as an example for description, and the number of SSBs may also be other values, when the number of SSBs takes other values, the number of transmission times of the PEI and the repeated transmission of different SSBs corresponding to each transmission time are similar, which will not be repeated here.

The configuration information can be acquired through a system information block or an RRC message, so as to acquire at least one of the start parameter, the time window parameter, and the number of transmission times R. Optionally, R is an integer greater than or equal to 2. In FIG. 5, R=2 is taking as an example for description. After acquiring the start parameter, the terminal device needs to determine the start moment of the PEI monitoring according to the start parameter, and this process will be described with reference to the drawings in the following.

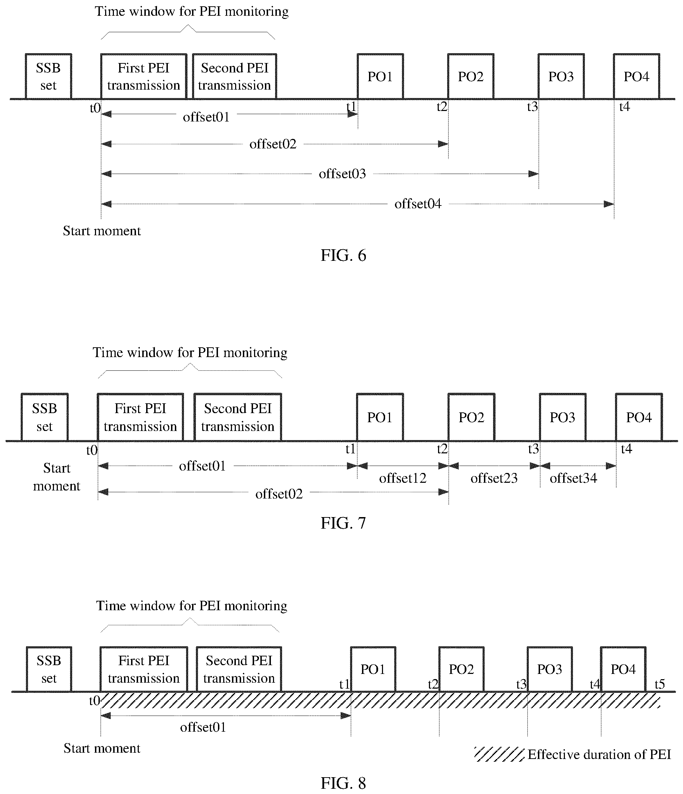

FIG. 6 is a schematic diagram 1 of determining a start moment provided by an embodiment of the present application. As shown in FIG. 6, the PEI is associated to 4 POs, and the 4 POs are arranged as PO1, PO2, PO3 and PO4 according to the time sequence. In the example in FIG. 6, an example is taken where the transmission opportunity parameter R=2, and R may take other values in actual applications.

Optionally, the start parameter includes a length of time between a respective paging occasion and the start moment of the PEI monitoring. For example, in the example in FIG. 6, POs associated to PEI include PO1, PO2, PO3 and PO4, then the start parameter includes a length of a time offset01 between the PO1 and the start moment (that is, the length of time between a moment t0 and a moment t1), a length of a time offset02 between the PO2 and the start moment (that is, the length of time between the moment t0 and a moment t2), a length of a time offset03 between the PO3 and the start moment (that is, the length of time between the moment t0 and a moment t3), and a length of a time offset04 between the PO4 and the start moment (that is, the length of time between the moment t0 and a moment t4).

A monitoring moment of each PO can be determined according to the formula in protocol 38.304. After the length of time between each PO and the start moment is acquired according to the start parameter, the start moment of the PEI monitoring can be acquired according to the monitoring moment of PO and the length of time between PO and the start moment. Optionally, as the PEI is associated with at least one PO, the start moments of the PEI monitoring acquired according to any PO (any one of POs) and the length of time between the PO and the start moment should be the same, that is, the moment t0 in FIG. 7. Therefore, after the start moments of the PEI monitoring are acquired according to respective POs and the lengths of time between the POs and the start moments, the POs corresponding to the same start moment should be the POs corresponding to the same PEI. In the example in FIG. 6, the start moment of the PEI monitoring is the moment t0.

FIG. 7 is a schematic diagram 2 of determining a start moment provided by an embodiment of the present application. As shown in FIG. 7, the PEI is associated to 4 POs, and the 4 POs are arranged as PO1, PO2, PO3 and PO4 according to the time sequence. In the example in FIG. 7, an example is taken where the transmission opportunity parameter R=2, and R may take other values in application.

Optionally, the start parameter includes a length of time between adjacent paging occasions, and/or, a length of time between any paging occasion and the start moment. For example, in the example in FIG. 7, the POs associated with the PEI include PO1, PO2, PO3 and PO4, then the start parameter includes a length of a time offset12 between PO1 and PO2 (that is, a length of time between a moment t1 and a moment t2), a length of a time offset23 between PO2 and PO3 (that is, a length of time between the moment t2 and a moment t3), a length of time offset 34 between PO3 and PO4 (that is, a length of time between the moment t3 and a moment t4), and a length of time between any PO and the start moment, where the "any PO" refers to any one of the POs associated with the PEI. For example, in the example in FIG. 7, the length of time between any PO and the start moment may be any one of: a length of time between PO1 and the start moment (that is, a length of time between t0 to t1 in FIG. 7), a length of time between PO2 and the start moment (that is, a length of time between t0 to t2 in FIG. 7), a length of time between PO3 and the start moment (that is, a length of time between t0 to t3 in FIG. 7), a length of time between PO4 and the start moment (that is, a length of time between t0 to t4 in FIG. 4).

The start moment of the PEI monitoring can be determined according to the length of time between adjacent POs and the length of time between any PO and the start moment. Taking that any PO is PO2 as an example, according to the monitoring moment t2 of PO2 and the length of the time offset02 between PO2 and the start moment, the start moment t0 of the PEI monitoring corresponding to PO2 can be determined (t0=t2-offset02); according to the monitoring moment t1 of PO1, the length of the time offset02 between PO2 and the start moment, and the length of the time offset12 between PO1 and PO2, the start moment t0 of the PEI monitoring corresponding to PO1 can be determined (t0=t1-(offset02-offset12)); according to the monitoring moment t3 of PO3, the length of the time offset02 between PO2 and the start moment, and the length of the time offset23 between PO3 and PO2, the start moment t0 of the PEI monitoring corresponding to PO3 can be determined (t0=t3-(offset02+offset23)); according to the monitoring moment t4 of PO4, the length of the time offset02 between PO2 and the start moment, the length of the time offset23 between PO3 and PO2, and a length of a time offset34 between PO4 and PO3, the start moment t0 of the PEI monitoring corresponding to PO4 can be determined (t0=t4-(offset02+offset23+offset34)). Since the start moments corresponding to PO1, PO2, PO3 and PO4 are the same, it can also be determined that PO1, PO2, PO3 and PO4 are different POs associated to the same PEI.

Optionally, the above mentioned any PO may be the first PO. The first PO is the first PO in the POs associated with the PEI arranged in a time sequence. For example, in the example in FIG. 7, the first PO is PO1. Then the start parameter includes a length of time between adjacent paging occasions, and/or, a length of time between the first paging occasion and the start moment. For example, in FIG. 7, the start parameter includes the length of the time offset12 between PO1 and PO2, the length of the time offset23 between PO2 and PO3, the length of the time offset34 between PO3 and PO4, and the length of the time offset01 between PO1 and the start moment.

The start moment of the PEI monitoring can be determined according to the length of time between adjacent POs and the length of time between the first PO and the start moment. According to the monitoring moment t1 of PO1 and the length of the time offset01 between PO1 and the start moment, the start moment t0 of the PEI monitoring corresponding to PO1 can be determined (t0=t1-offset01); according to the monitoring moment t2 of PO2, the length of the time offset01 between PO1 and the start moment, and the length of the time offset12 between PO1 and PO2, the start moment t0 of the PEI monitoring corresponding to PO2 can be determined (t0=t2-(offset01+ offset12)); according to the monitoring moment t3 of PO3, the length of the time offset01 between PO1 and the start moment, the length of the time offset12 between PO1 and PO2, and the length of the time offset23 between PO2 and PO3, the start moment t0 of the PEI monitoring corresponding to PO3 can be determined (t0=t3-(offset01+offset12+offset23)); according to monitoring moment t4 of PO4, the length of the time offset12 between PO1 and PO2, the length of the time offset23 between PO2 and PO3, and the length of time offset34 between PO4 and PO3, the start moment t0 of the PEI monitoring corresponding to PO4 can be determined (t0=t4-(offset01+offset12+offset23+offset34)). Since the start moments corresponding to PO1, PO2, PO3 and PO4 are the same, it can also be determined that PO1, PO2, PO3 and PO4 are different POs associated to the same PEI. In the example in FIG. 7, the start moment of the PEI monitoring is the moment t0.

Compared to the solution that the start parameter includes lengths of time between respective POs and the start moments of PEI monitoring, the start parameter including lengths of time between adjacent POs and the length of time of any PO and the start moment can save bits representing lengths of time.

FIG. 8 is a schematic diagram 3 of determining a start moment provided by an embodiment of the present application. As shown in FIG. 8, the PEI is associated to 4 POs, and the 4 POs are arranged as PO1, PO2, PO3 and PO4 according to the time sequence. In the example in FIG. 8, an example is taken where the transmission opportunity parameter R=2, and R may take other values in application.

Optionally, the start parameter includes a length of time between the first paging occasion and the start moment, and/or, an effective duration of the PEI. The first PO is the first PO in the POs associated with the PEI arranged in a time sequence. For example, in the example in FIG. 8, the first PO is PO1. In the example of FIG. 8, the start parameter includes a length of the time offset01 between PO1 and the start moment (that is, a length of time between a moment t0 and a moment t1), and the effective duration T of PEI (shown as shading in FIG. 8). The effective duration of the PEI indicates a jurisdiction duration of the PEI, that is, all the POs in the effective duration are POs associated with the PEI. For example, in the example in FIG. 8, PO1, PO2, PO3 and PO4 are all located in the effective duration of the PEI, hence PO1, PO2, PO3 and PO4 are POs associated with the PEI. Since the start moment of the PEI monitoring can be determined according to PO1 and the length of time between PO1 and the start moment, and the monitoring moments of the respective POs are already known, hence the start moment of the PEI corresponding to the respective POs can be acquired according to the start moment of the PEI monitoring, the monitoring moments of the respective POs and the effective duration of the PEI.

FIG. 6 to FIG. 8 illustratively show three solutions of how to determine the start moment of the PEI monitoring in the case that the PEI is associated with at least one PO.

Optionally, the start parameter includes a period of the PEI, and/or, the number of frames of the paging early indication included in the period of PEI, and the start moment can be determined according to the period of the PEI and the number of frames of the paging early indication included in the period of the PEI.

Optionally, a radio frame where the start moment is located, the period of the paging early indication, the number of frames of the paging early indication and an identifier of the terminal device satisfy the following conditions:

$$\text{PEI\_SFN mod } T1 = (T1 \text{ div } N1) * (UE\_ID \text{ mod } N1), \tag{1}$$

PEI_SFN is the radio frame where the start moment is located;
T1 is the period of the paging early indication;

N1 is the number of frames of the paging early indication included in the period of the paging early indication;
UE_ID is the identifier of the terminal device, and UE_ID=5G-S-TMSI mod 1024.

After the radio frame where the start moment of the PEI monitoring is located is acquired according to formula (1), if the PEI is associated with at least one PO, the rest of POs can know whether the PO is a PO associated with the PEI according to the position of the radio frame where the PEI is located.

For example, a sub-carrier space (Sub-Carrier Space, SCS) of 15KHz is taken as an example, and if PEI_SFN is a slot (slot) 0 of a radio frame 0, and PO1 is in a slot 2 of a radio frame 1, then the length of time between PO1 and the start moment of the PEI monitoring is 12ms. After PEI_SFN is given according to formula (1), since time intervals between radio frames are all 10ms, offset=2ms can be configured, and the length of time between the start moment and PO1 is 10ms+2ms=12ms.

If, among two adjacent PEIs, the radio frame where the start moment of the first PEI is located is the radio frame 0, and the radio frame in which the start moment of the second PEI is located is a radio frame 2, it means that the POs in the radio frame 0 and the radio frame 1 are both POs associated with the first PEI.

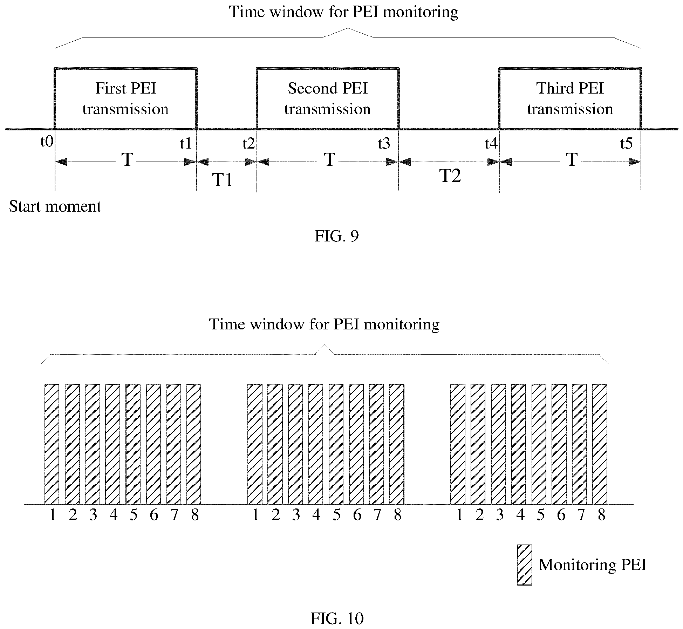

After the start moment of the PEI monitoring is determined according to the start parameter, the duration of the PEI monitoring can be known according to the time window parameter. FIG. 9 is a schematic diagram of PEI transmission provided by an embodiment of the present application. As shown in FIG. 9, the duration of the PEI monitoring determined by the time window parameter of the PEI monitoring is shown, and three PEI transmission occasions with the transmission parameter of 3 are shown in the duration.

Optionally, a time interval between any two adjacent PEI transmissions for the same beam is greater than or equal to the transmission duration of one PEI transmission. For example, the transmission duration of one PEI transmission is T, then the time interval between any two adjacent PEI transmissions is greater than or equal to T.

When the time interval between any two adjacent PEI transmissions for the same beam is equal to the transmission duration of one PEI transmission, it means that a next PEI transmission is started immediately after one PEI transmission.

When the time interval between any two adjacent PEI transmissions is greater than the transmission duration of one PEI transmission, it means that a certain offset duration needs to be waited after one PEI transmission before a next PEI transmission is started. That is, the time interval between any two adjacent PEI transmissions is equal to a sum of the transmission duration of one PEI transmission and the offset duration.

Optionally, the offset duration may be at least one of a preset duration, a duration configured by a system information block, a duration configured by an RRC message. The preset duration is a duration agreed by the network device and the terminal device in advance. When the offset duration is a duration configured by the system information block, the network device can transmit the system information block to the terminal device, and the terminal device receives the system information block, and acquires the offset duration according to the system information block. And/or, when the offset duration is a duration configured by the RRC message, the network device can transmit the RRC message to the terminal device, and the terminal device receives the RRC message, and acquires the offset duration according to the RRC message.

Optionally, the offset durations corresponding to the time intervals between any two adjacent PEI transmissions may be the same, or may not be the same, they may all be preset durations, or durations configured by system information block(s), or durations configured by RRC message(s), or they may partly be preset duration(s), partly be duration(s) configured by the system information block, partly be duration(s) configured by the RRC message.

For example, in the example in FIG. 9, the time interval between the first PEI transmission and the second PEI transmission is equal to the transmission duration of one PEI transmission added with a first offset duration T1, the time interval between the second PEI transmission and the third PEI transmission is equal to the transmission duration of one PEI transmission added with a second offset duration T2. The first offset duration T1 may be equal to the second offset duration T2, or may not be equal to the second offset duration T2. The first offset duration T1 may be a preset duration, or may be a duration configured by a system information block, or may be a duration configured by an RRC message; the second offset duration T2 may be a preset duration, or may be a duration configured by a system information block, or may be a duration configured by an RRC message.

After determining the PEI monitoring occasion according to the configuration information, the terminal device may monitor the PEI in the monitoring occasion. Optionally, the network transmits a DCI-based PEI to the terminal device, and the terminal device monitors a PDCCH according to the monitoring occasion determined through the configuration information to acquire indication information in the PEI. The terminal device can determine the end moment of the PEI monitoring according to the start moment and the duration, and the terminal device monitors the PDCCH between the start moment and the end moment to acquire the indication information in the PEI.

The network device transmits, between the start moment and the end moment, the DCI-based PEI to the terminal device according to the transmission opportunity parameter, and the times that the network device transmits the PEI is the number of transmission times indicated by the transmission opportunity parameter. Sine one SSB set is associated with 8 beams or SSBs, the PEIs correspond to the beams one by one. It is assumed that, in the duration of the PEI monitoring, the number of transmission times indicated by the transmission opportunity is R, then it represents that the PEI corresponding to each beam has R transmission times. For example, when the PEI is associated with 8 beams and 4 POs, there are 8*R monitoring occasions in the duration of the PEI monitoring.

FIG. 10 is a schematic diagram 1 of PEI monitoring provided by an embodiment of the present application. As shown in FIG. 10, the PEI associated with 8 beams and 3 POs is illustratively shown, where the 8 beams correspond to 8 monitoring occasions for each PEI transmission respectively (as shown as 1, 2, 3, 4, 5, 6, 7 and 8 in FIG. 10). In FIG. 10, in the time window for the PEI monitoring (that is, the duration of the PEI monitoring), there are 8*n monitoring occasions, where n is the number of transmission opportunities of the PEI corresponding to the same beam.

Optionally, the terminal device monitors the DCI-based PEI in each monitoring occasion, as shown in FIG. 10. Since the number of transmission times R of the PEI is greater than 1, the terminal device can keep receiving the same PEI for the same beam for multiple times, so as to improve the success rate of the PEI analysis.

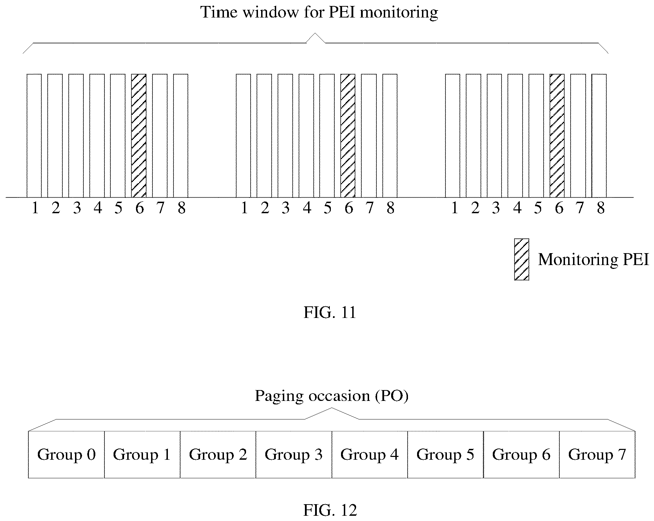

FIG. 11 is a schematic diagram 2 of PEI monitoring provided by an embodiment of the present application. As shown in FIG. 11, the PEI associated with 8 beams and 3 POs is illustratively shown, where the 8 beams correspond to 8 monitoring occasions for each PEI transmission respectively (as shown as 1, 2, 3, 4, 5, 6, 7 and 8 in FIG. 11). In FIG. 11, in the time window for the PEI monitoring (that is, the duration of the PEI monitoring), there are 8*n monitoring occasions, where n is the number of transmission opportunities corresponding to the same beam.

Optionally, the terminal device acquires a reference signal receiving power (Reference Signal Receiving Power, RSRP) corresponding to at least one beam, and determines a target beam according to the RSRP, and determines a target monitoring occasion corresponding to the target beam in the monitoring occasions. Finally, a PDCCH is monitored in the target monitoring occasion, and the PEI is received.

As shown in FIG. 11, the terminal device can acquire RSRP(s) corresponding to one or more beams, and can determine the target beam, i.e., a beam 6, according to the RSRP(s) corresponding to the one or more beams. Then, the target monitoring occasion corresponding to the beam 6 can be determined, as shown as shading in FIG. 11. Since the number of transmission times of PEI is greater than 1, the times of PEI transmission is increased, so as to increase the success rate for the terminal device to receive the PEI. At the same time, a monitoring occasion with best channel quality can be determined according to the RSRP(s), and the DCI-based PEI is monitored in the monitoring occasion with best channel quality, so that the DCI-based PEI does not need to be monitored in all monitoring occasions, thus further saving power consumption of the terminal device.

Optionally, the PEI is used to indicate a monitoring state of a PO corresponding to a grouped terminal device. Optionally, all grouped terminal devices of the same PO can correspond to one PEI, that is, all grouped terminal devices of the same PO correspond to one PDCCH search space.

Optionally, the paging early indication includes a first indication bit corresponding to a group to which at least one terminal device belongs, where the first indication bit is used to indicate a monitoring state of a corresponding group to which a terminal device belongs.

Table 1 shows the first indication bit included in the paging early indication, and optionally, the first indication bit includes examples of indication bits in rows 1-9. An example is taken where one PEI is associated with one PO, it is assumed that groups corresponding to the POs include a group 0, a group 1, a group 2, a group 3, a group 4, a group 5, a group 6 and a group 7, and the group to which the terminal device belongs is one of the above groups.

Taking the first indication bit with four bits as an example, as shown in Table 1, for example, when the first indication bit is 0000, it means that the terminal device corresponding to the group 0 needs to be waked up to monitor PO; when the first indication bit is 0001, it means that the terminal device corresponding to the group 1 needs to be waked up to monitor PO; when the first indication bit is 0010, it means that the terminal device corresponding to the group 2 needs to be waked up to monitor PO; when the first indication bit is 0011, it means that the terminal device corresponding to the group 3 needs to be waked up to monitor PO; when the first indication bit is 0100, it means that the terminal device corresponding to the group 4 needs to be waked up to monitor PO; when the first indication bit is 0101, it means that the terminal device corresponding to the group 5 needs to be waked up to monitor PO; when the first indication bit is 0110, it means that the terminal device corresponding to the group 6 needs to be waked up to monitor PO; when the first indication bit is 0111, it means that the terminal device corresponding to the group 7 needs to be waked up to monitor PO. Through the first indication bit, the terminal device corresponding to a certain group in at least one group can be instructed to be waked up to monitor PO.

Table 1

| Row | Indication bit | Meaning represented |
|-----|----------------|---------------------|
| 1 | 0000 | The terminal device corresponding to the group 0 needs to be waked up to monitor PO |
| 2 | 0001 | The terminal device corresponding to the group 1 needs to be waked up to monitor PO |

(continued)

| Row | Indication bit | Meaning represented |
|---|---|---|
| 3 | 0010 | The terminal device corresponding to the group 2 needs to be waked up to monitor PO |
| 4 | 0011 | The terminal device corresponding to the group 3 needs to be waked up to monitor PO |
| 5 | 0100 | The terminal device corresponding to the group 4 needs to be waked up to monitor PO |
| 6 | 0101 | The terminal device corresponding to the group 5 needs to be waked up to monitor PO |
| 7 | 0110 | The terminal device corresponding to the group 6 needs to be waked up to monitor PO |
| 8 | 0111 | The terminal device corresponding to the group 7 needs to be waked up to monitor PO |
| 9 | 1000 | All terminal devices need to be waked up to monitor PO |

Optionally, the paging early indication includes a second indication bit corresponding to the at least one paging occasion, where the second indication bit is used to indicate a monitoring state of a group to which the terminal device belongs in the at least one paging occasion associated with the PEI. According to the second indication bit, the monitoring state of the group, corresponding to the at least one PO, to which the terminal device belongs can be known.

Table 2 shows the second indication bit included in the paging early indication, and the second indication bit indicates the monitoring state of the group to which the terminal device belongs in the case that the PEI is associated with two or more POs. An example is taken where one PEI is associated with two POs, the two POs are PO1 and PO2 respectively, it is assumed that groups corresponding to the PO1 and PO2 both include the group 0, the group 1, the group 2, the group 3, the group 4, the group 5, the group 6 and the group 7, and the group to which the terminal device belongs is one of the above groups.

In this case, the first four bits of the second indication bit may be set to indicate the monitoring state of the group, corresponding to PO1, to which the terminal device belongs, and the last four bits may indicate the monitoring state of the group, corresponding to PO2, to which the terminal device belongs. Or the first four bits of the second indication bit may be set to indicate the monitoring state of the group, corresponding to PO2, to which the terminal device belongs, and the last four bits may indicate the monitoring state of the group, corresponding to PO1, to which the terminal device belongs.

An example is taken where the first four bits of the second indication bit indicate the monitoring state of the group, corresponding to PO1, to which the terminal device belongs, and the last four bits indicate the monitoring state of the group, corresponding to PO2, to which the terminal device belongs, Table 2 shows the second indication bit included in PEI. Optionally, rows 1-9 represent the monitoring states of the terminal devices in the groups corresponding to PO1 indicated by the first four bits of the second indication bit, and rows 10-18 represent the monitoring states of the terminal devices in the groups corresponding to PO2 indicated by the last four bits of the second indication bit.

As shown in Table 2, for example, when the first four bits of the second indication bit are 0000, it means that the terminal device corresponding to the group 0 needs to be waked up to monitor PO1; when the first four bits of the second indication bit are 0001, it means that the terminal device corresponding to the group 1 needs to be waked up to monitor PO1; when the first four bits of the second indication bit are 0010, it means that the terminal device corresponding to the group 2 needs to be waked up to monitor PO1; when the first four bits of the second indication bit are 0011, it means that the terminal device corresponding to the group 3 needs to be waked up to monitor PO1; when the first four bits of the second indication bit are 0100, it means that the terminal device corresponding to the group 4 needs to be waked up to monitor PO1; when the first four bits of the second indication bit are 0101, it means that the terminal device corresponding to the group 5 needs to be waked up to monitor PO1; when the first four bits of the second indication bit are 0110, it means that the terminal device corresponding to the group 6 needs to be waked up to monitor PO1; when the first four bits of the second indication bit are 0111, it means that the terminal device corresponding to the group 7 needs to be waked up to monitor PO1; when the first four bits of the second indication bit are 1000, it means that the terminal devices corresponding to all groups need to be waked up to monitor PO1.

When the last 4 bits of the second indication bit are 0000, it means that the terminal device corresponding to the group 0 needs to be waked up to monitor PO2; when the last 4 bits of the second indication bit are 0001, it means that the terminal device corresponding to the group 1 needs to be waked up to monitor PO2; when the last 4 bits of the second indication bit are 0010, it means that the terminal device corresponding to the group 2 needs to be waked up to monitor PO2; when the last 4 bits of the second indication bit are 0011, it means that the terminal device corresponding to the group 3 needs to be waked up to monitor PO2; when the last 4 bits of the second indication bit are 0100, it means that the terminal device corresponding to the group 4 needs to be waked up to monitor PO2; when the last 4 bits of the second indication bit are 0101, it means that the terminal device corresponding to the group 5 needs to be waked up to monitor PO2; when the last 4 bits of the second indication bit are 0110, it means that the terminal device corresponding to the group 6 needs to be waked up to monitor PO2; when the last 4 bits of the second indication bit are 0111, it means that the terminal device corresponding to the group 7 needs to be waked up to monitor PO2; when the first four bits of the second indication bit are 1000, it means that the terminal devices corresponding to all groups need to be waked up to monitor PO2.

Table 2

| Row | Indication bit | Meaning represented |
|---|---|---|
| 1 | 0000 (first four bits of the second indication bit) | The terminal device corresponding to the group 0 needs to be waked up to monitor PO1 |
| 2 | 0001 (first four bits of the second indication bit) | The terminal device corresponding to the group 1 needs to be waked up to monitor PO1 |
| 3 | 0010 (first four bits of the second indication bit) | The terminal device corresponding to the group 2 needs to be waked up to monitor PO1 |
| 4 | 0011 (first four bits of the second indication bit) | The terminal device corresponding to the group 3 needs to be waked up to monitor PO1 |
| 5 | 0100 (first four bits of the second indication bit) | The terminal device corresponding to the group 4 needs to be waked up to monitor PO1 |
| 6 | 0101 (first four bits of the second indication bit) | The terminal device corresponding to the group 5 needs to be waked up to monitor PO1 |
| 7 | 0110 (first four bits of the second indication bit) | The terminal device corresponding to the group 6 needs to be waked up to monitor PO1 |
| 8 | 0111 (first four bits of the second indication bit) | The terminal device corresponding to the group 7 needs to be waked up to monitor PO1 |
| 9 | 1000 (first four bits of the second indication bit) | All terminal devices need to be waked up to monitor PO1 |
| 10 | 0000 (last four bits of the second indication bit) | The terminal device corresponding to the group 0 needs to be waked up to monitor PO2 |
| 11 | 0001 (last four bits of the second indication bit) | The terminal device corresponding to the group 1 needs to be waked up to monitor PO2 |
| 12 | 0010 (last four bits of the second indication bit) | The terminal device corresponding to the group 2 needs to be waked up to monitor PO2 |
| 13 | 0011 (last four bits of the second indication bit) | The terminal device corresponding to the group 3 needs to be waked up to monitor PO2 |
| 14 | 0100 (last four bits of the second indication bit) | The terminal device corresponding to the group 4 needs to be waked up to monitor PO2 |
| 15 | 0101 (last four bits of the second indication bit) | The terminal device corresponding to the group 5 needs to be waked up to monitor PO2 |
| 16 | 0110 (last four bits of the second indication bit) | The terminal device corresponding to the group 6 needs to be waked up to monitor PO2 |
| 17 | 0111 (last four bits of the second indication bit) | The terminal device corresponding to the group 7 needs to be waked up to monitor PO2 |
| 18 | 1000 (last four bits of the second indication bit) | All terminal devices need to be waked up to monitor PO2 |

It should be noted that, in the above embodiments, the groups corresponding to PO including 8 groups are taken as an example for description, and the 8 groups can indicate the monitoring state of the terminal device in each group by the 4-bit indication bit. In actual applications, the number of groups corresponding to the PO can also be other values, and the number of bits of the corresponding indication bit can also be adjusted accordingly.

For the second indication bit, one PEI associated with 2 POs is taken as an example for description in Table 2, where one PO corresponds to 4-bit indication bit, and the number of bits of the second indication bit is 8. In actual applications, the number of POs associated with one PEI may also be other values, for example, 3 POs or 4 POs are associated, etc. If one PO corresponds to 4-bit indication bit, and PEI is associated with 3 POs, then the number of bits of the second indication bit can be 12. When the number of POs associated with the PEI takes other values, the number of bits of the second indication bit can also be adjusted accordingly.

Optionally, the paging early indication includes a third indication bit, where the third indication bit is used to indicate an independent monitoring state of at least one grouped terminal device in a corresponding paging occasion.

FIG. 12 is a schematic diagram of a third indication bit included in PEI provided by an embodiment of the present application. As shown in FIG. 12, an example is taken where one PEI is associated with one PO, the groups corresponding to the PO include a group 0, a group 1, a group 2, a group 3, a group 4, a group 5, a group 6 and a group 7, and the group to which the terminal device belongs is one of the above groups. The PEI includes the third indication bit of each group, and the third indication bit indicates the monitoring state of the group to which the terminal device belongs. For example, when the third indication bit is 1, it represents that the terminal device needs to be waked up to monitor the PO, and/or, when the third indication bit is 0, it represents that the terminal device does not need to be waked up to monitor the PO. The terminal device can know whether it needs to monitor PO according to the third indication bit of the group to which the terminal device belongs.

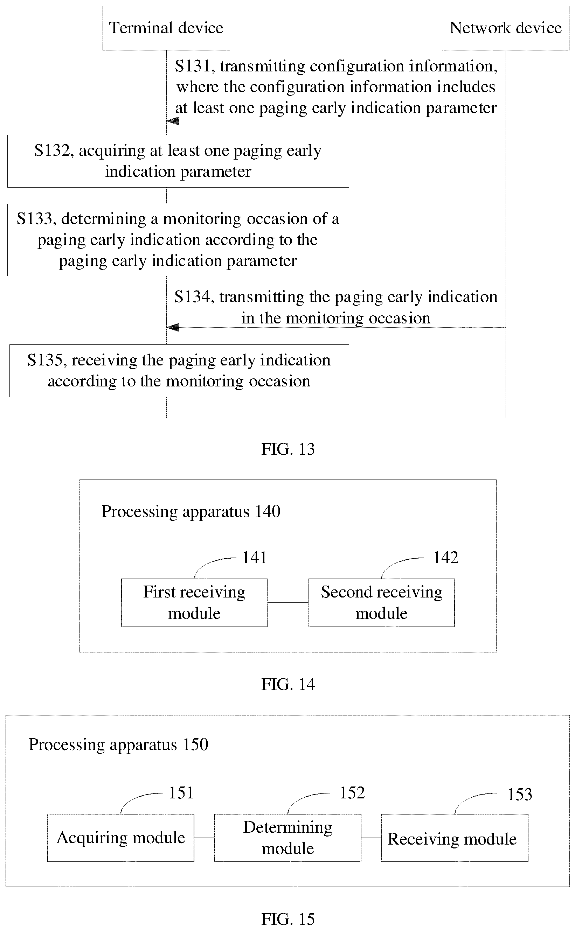

FIG. 13 is a schematic signaling interaction diagram 2 of a processing method provided by an embodiment of the present application. As shown in FIG. 13, the method may include:

S131, a network device transmits configuration information, where the configuration information includes at least one paging early indication parameter.

In some cases, the terminal device may not be able to receive the PEI. For example, when the PEI conflicts with the high-priority service, the terminal device will choose to give priority to the high-priority service and discard the PEI; for example, when the terminal device miss-detects PEI; for example, the channel environment of the terminal device is poor, which leads to a low success rate of PEI analysis, and so on.

If the terminal device cannot successfully receive PEI, it will delay the wake-up of the terminal device, thus affecting data transmission. In order to improve the success rate of PEI reception, in the embodiment of the present application, before transmitting the paging early indication, the network device may first transmit configuration information to the terminal device to indicate a PEI monitoring occasion. Optionally, the configuration information includes at least one paging early indication parameter, and the PEI monitoring occasion can be determined according to the paging early indication parameter.

S132, the terminal device acquires at least one paging early indication parameter.

The terminal device can receive the configuration information from the network device, and can acquire at least one paging early indication parameter according to the configuration information.

The network device can indicate the PEI monitoring occasion to the terminal device through the configuration information, that is, the network device transmits the configuration information to the terminal device, and the terminal device determines the PEI monitoring occasion according to the configuration information.

Optionally, the configuration information is independent information, that is, the configuration information is not carried on other information or information on signaling, and the network device directly transmits the configuration information to the terminal device.

Optionally, the configuration information is information carried on a system information block, that is, the manner that the network device transmits the configuration information to the terminal device could be: the network device transmits the system information block to the terminal device, and the system information block includes the configuration information; after receiving the system information block from the network device, the terminal device acquires the configuration information from the system information block.

Optionally, the configuration information is information carried on an RRC message, that is, the manner that the network device transmits the configuration information to the terminal device could be: the network device transmits the RRC message to the terminal device, and the RRC message includes the configuration information; after receiving the RRC message from the network device, the terminal device acquires the configuration information according to the RRC message.

S133, the terminal device determines, according to the paging early indication parameter, a monitoring occasion of a paging early indication.

The PEI monitoring occasion may include a start moment of PEI transmission, a duration of PEI transmission, and the number of transmission times of the PEI, etc.

S134, the network device transmits the paging early indication in the monitoring occasion.

After indicating the PEI monitoring occasion to the terminal device through the configuration information, the network device may transmit the PEI to the terminal device in the monitoring occasion. Optionally, the PEI may be associated to one PO, or may be associated to multiple POs. The number of transmission times that the network device transmits PEI to the terminal device in the monitoring occasion may be once or multiple times. Optionally, the number of transmission times is a positive integer greater than or equal to 2.

S135, the terminal device receives the paging early indication according to the monitoring occasion.

The paging early indication is used to indicate whether a paging message exists in at least one paging occasion. After determining the PEI monitoring occasion according to the configuration information, the terminal device may receive the PEI in the monitoring occasion. For example, when the monitoring occasion includes the start moment of the PEI monitoring, the terminal device can start to monitor a DCI-based PEI from the start moment; and when the monitoring occasion includes the duration of the PEI monitoring, the terminal device can determine the end moment of the PEI monitoring according to the start moment and the duration, and the terminal device can terminate the monitoring when the end moment is reached, or the terminal device can also terminate the PEI monitoring in the subsequent PEI monitoring occasion after the terminal device successfully decodes one PEI. Since the network device may transmit the PEI to the terminal device for once or multiple times in the monitoring occasion, the terminal device can receive the PEI for once or multiple times in the monitoring occasion according to the number of transmission times. Optionally, the number of transmission times of the PEI is a positive integer greater than or equal to 2. For example, when the number of transmission times of the PEI is 2, the terminal device may perform PEI monitoring for two times. Compared to single-time PEI monitoring, it can increase the success rate of PEI reception.

For example, when the number of transmission times of PEI is one, if the terminal device is processing high-priority services, the PEI conflicts with the high-priority services, and at this time, the terminal device may choose to discard the PEI to process the high-priority services first, and the terminal device fails to receive the PEI. And/or, when the number of transmission times of the PEI is greater than one, even if confliction with the high-priority services occurs in one transmission process of the PEI, the terminal device can also receive the PEI in other transmission opportunities, thus increasing the success rate of PEI reception in the case that the PEI transmission conflicts with the high-priority services.

For example, when the number of transmission times of the PEI is one, if the terminal device miss-detects the PEI, the terminal devices fails to receive the PEI. And/or, when the number of transmission times of the PEI is greater than one, even if miss-detection occurs in one transmission process of the PEI, the terminal device can also receive the PEI in other transmission opportunities, thus increasing the success rate of PEI reception in the case of PEI miss-detection.

For example, when the number of transmission times of the PEI is one, the poor channel environment leads to a low success rate of PEI analysis, and further leads to that the terminal device fails to receive the PEI. And/or, when the number of transmission times of the PEI is greater than one, even if PEI analysis failure occurs in one transmission process of the PEI, the terminal device can also successfully analyze the PEI in other transmission opportunities, or can even combine PEIs in multiple transmissions, thus increasing the success rate of PEI reception in the case of poor channel environment.

That is, configuring more than one transmission time for PEI transmission in the monitoring occasion can increase the success rate of PEI reception, reduce the problem that delay in data transmission is finally incurred due to wake-up delay of the terminal device which is resulted from failure in receiving the paging early indication.

The configuration information is used to indicate the PEI monitoring occasion, and the configuration information includes at least one paging early indication parameter, and the PEI monitoring occasion can be determined according to the paging early indication parameter.

Optionally, the configuration information may include at least one of a start parameter, a time window parameter, and a transmission opportunity parameter. The start parameter is used to indicate a start moment of the PEI monitoring, that is, the start parameter indicates when does the terminal device start to monitor the PEI. The time window parameter is used to indicate a duration of the PEI monitoring, that is, the time window parameter indicates how long does the terminal device need to keep monitoring the PEI. The transmission opportunity parameter indicates the number of transmission times of the PEI, and the transmission opportunity parameter takes a value of positive integer, and the number of transmission times of the PEI indicated by the transmission opportunity parameter may be once or multiple times.

Optionally, the start parameter includes at least one of the following: a length of time between at least one paging occasion and the start moment; a length of time between adjacent paging occasions; a length of time between any paging occasion and the start moment; a length of time between the first paging occasion and the start moment; an effective duration of the paging early indication; a period of the paging early indication; the number of frames of the paging early indication. The start moment of the PEI monitoring can be determined according to one or more of the above.

PEIs correspond to beams one by one. For example, as shown in FIG. 5, there are paging occasions corresponding to respective beams in a target paging occasion. An SSB set includes transmission occasions of the respective beams, which is also called transmission occasions of respective SSBs. Two times of PEI transmissions are illustratively shown in FIG. 5, and each time of PEI transmission includes 8 monitoring occasions (part of which is omitted in the figure). It is assumed that there are three SSB sets before the paging occasion, and each SSB set has 8 SSB transmission opportunities, that is, there are 8 beams, then PEI MO1 represents a PEI monitoring occasion associated with SSB#0 (representing the first beam of the SSB set), PEI MO2 represents a PEI monitoring occasion associated with SSB#1 (representing the second beam of the SSB set), and PEI MO3 represents a PEI monitoring occasion associated with SSB#2 (representing the third beam of the SSB set), and so on.

Optionally, the number of transmission times indicated by the transmission opportunity parameter is the number of transmission times of the PEI corresponding to each SSB. Taking that the SSB set has 8 SSBs as an example, 8 SSBs correspond to 8 beams, and each beam corresponds to one PDCCH. Since the terminal device may only receive part of the 8 beams, and cannot receive all of the beams, the PEI corresponding to each beam needs to be transmitted in one PEI transmission. For each transmission, the PEI is repeatedly transmitted in the 8 different SSB directions, that is, the PEI corresponding to the 8 beams is transmitted repeatedly. In one PEI transmission, repeated transmission of the PEI corresponding to each beam is included, hence 8 monitoring occasions of the PEI are included in one PEI transmission.

For example, as shown in FIG. 5, for the first PEI transmission, 8 SSBs correspond to 8 beams, and also correspond to 8 monitoring occasions of PEI. PEI MO1, PEI MO2, ..., PEI MO7, PEI MO8 refer to that the PEI is repeatedly transmitted in 8 different SSB directions. The content of the PEI MO1, PEI MO2, ..., PEI MO7, PEI MO8 is completely the same, but the corresponding beams or SSBs are different. That is, PEI MO1 corresponds to a beam 1, PEI MO2 corresponds to a beam 2, PEI MO3 corresponds to a beam 3, ..., PEI MO8 corresponds to a beam 8. It is the same for the second PEI transmission, PEI MO1, PEI MO2, ..., PEI MO7, PEI MO8 refer to that the PEI is repeatedly transmitted in 8 different SSB directions.

The number of transmission times indicated by the transmission opportunity parameter is the number of transmission times of the PEI corresponding to each SSB. It is assumed that SSB set has 8 SSBs, and the 8 SSBs correspond to 8 beams, and the 8 SSBs are SSB1, SSB2, ..., SSB8. For each SSB, the number of transmission times of the corresponding PEI is the number of transmission times R indicated by the transmission opportunity parameter. For example, in FIG. 5, taking R=2 as an example. For SSB1, the number of transmission times of the PEI corresponding to SSB1 is 2, that is, PEI MO1 in the first PEI transmission, and PEI MO1 in the second PEI transmission; for SSB2, the number of transmission times of the PEI corresponding to SSB2 is 2, that is, PEI MO2 in the first PEI transmission, PEI MO2 in the second PEI transmission, and so on. For any bean or SSB, the number of transmission times of the PEI corresponding to the beam or the SSB is the number of transmission times R indicated by the transmission opportunity, and R is an integer greater than or equal to 1.

In the above embodiment, 8 SSBs (8 beams) are taken as an example for description, and the number of SSBs may also be other values, when the number of SSBs takes other values, the number of transmission times of the PEI and the repeated transmission of different SSBs corresponding to each transmission time are similar, which will not be repeated here.

The configuration information can be acquired through a system information block or an RRC message, so as to acquire the start parameter, the time window parameter, and the number of transmission times R. Optionally, R is an integer greater than or equal to 2. In FIG. 5, R=2 is taking as an example for description. After acquiring the start parameter, the terminal device needs to determine the start moment of the PEI monitoring according to the start parameter.

Optionally, the start parameter includes a length of time between a respective paging occasion and the start moment of the PEI monitoring. For example, in the example in FIG. 6, POs associated to PEI include PO1, PO2, PO3 and PO4, then the start parameter includes a length of a time offset01 between the PO1 and the start moment (that is, the length of time between a moment t0 and a moment t1), a length of a time offset02 between the PO2 and the start moment (that is, the length of time between the moment t0 and a moment t2), a length of a time offset03 between the PO3 and the start moment (that is, the length of time between the moment t0 and a moment t3), and a length of a time offset04 between the PO4 and the start moment (that is, the length of time between the moment t0 and a moment t4).

Since a monitoring moment of each PO is determined according to the formula in protocol 38.304. After the length of time between each PO and the start moment is acquired according to the start parameter, the start moment of the PEI monitoring can be acquired according to the monitoring moment of PO and the length of time between PO and the start moment. Optionally, as the PEI is associated with at least one PO, the start moments of the PEI monitoring acquired according to any PO and the length of time between the PO and the start moment should be the same, that is, the moment t0 in FIG. 7. Therefore, after the start moments of the PEI monitoring are acquired according to respective POs and the lengths of time between the POs and the start moment, the POs corresponding to the same start moment should be the POs corresponding to the same PEI. In the example in FIG. 6, the start moment of the PEI monitoring is the moment t0.

Optionally, the start parameter includes a length of time between adjacent paging occasions, and/or, a length of time between any paging occasion and the start moment. For example, in the example in FIG. 7, the POs associated with the PEI include PO1, PO2, PO3 and PO4, then the start parameter includes a length of a time offset12 between PO1 and PO2 (that is, a length of time between a moment t1 and a moment t2), a length of a time offset23 between PO2 and PO3 (that is, a length of time between the moment t2 and a moment t3), a length of a time offset 34 between PO3 and PO4 (that is, a length of time between the moment t3 and a moment t4), and a length of time between any PO and the start moment, where the "any PO" refers to any one of the POs associated with the PEI. For example, in the example in FIG. 7, the length of time between any PO and the start moment may be any one of: a length of time between PO1 and the start moment (that is, a length of time between t0 to t1 in FIG. 7), a length of time between PO2 and the start moment (that is, a length of time between t0 to t2 in FIG. 7), a length of time between PO3 and the start moment (that is, a length of time between t0 to t3 in FIG. 7), a length of time between PO4 and the start moment (that is, a length of time between t0 to t4 in FIG. 4).

The start moment of the PEI monitoring can be determined according to the length of time between adjacent POs and the length of time between any PO and the start moment. Taking that any PO is PO2 as an example, according to the monitoring moment t2 of PO2 and the length of the time offset02 between PO2 and the start moment, the start moment t0 of the PEI monitoring corresponding to PO2 can be determined (t0=t2-offset02); according to the monitoring moment t1 of PO1, the length of the time offset02 between PO2 and the start moment, and the length of the time offset12 between PO1 and PO2, the start moment t0 of the PEI monitoring corresponding to PO1 can be determined (t0=t1-(offset02-offset12)); according to the monitoring moment t3 of PO3, the length of the time offset02 between PO2 and the start moment, and the length of the time offset23 between PO3 and PO2, the start moment t0 of the PEI monitoring corresponding to PO3 can be determined (t0=t3-(offset02+offset23)); according to the monitoring moment t4 of PO4, the length of the time offset02 between PO2 and the start moment, the length of the time offset23 between PO3 and PO2, and a length of a time offset34 between PO4 and PO3, the start moment t0 of the PEI monitoring corresponding to PO4 can be determined (t0=t4-(offset02+offset23+offset34)). Since the start moments corresponding to PO1, PO2, PO3 and PO4 are the same, it can also be determined that PO1, PO2, PO3 and PO4 are different POs associated to the same PEI.

Optionally, the above mentioned any PO may be the first PO. The first PO is the first PO in the POs associated with the PEI arranged in a time sequence. For example, in the example in FIG. 7, the first PO is PO1. Then the start parameter includes a length of time between adjacent paging occasions, and/or, a length of time between the first paging occasion and the start moment. For example, in FIG. 7, the start parameter includes the length of the time offset12 between PO1 and PO2, the length of the time offset23 between PO2 and PO3, the length of the time offset34 between PO3 and PO4, and the length of the time offset01 between PO1 and the start moment.

The start moment of the PEI monitoring can be determined according to the length of time between adjacent POs and the length of time between the first PO and the start moment. According to the monitoring moment t1 of PO1, and the length of the time offset01 between PO1 and the start moment, the start moment t0 of the PEI monitoring corresponding to PO1 can be determined (t0=t1-offset01); according to the monitoring moment t2 of PO2, the length of the time offset01 between PO1 and the start moment, and the length of the time offset12 between PO1 and PO2, the start moment t0 of the PEI monitoring corresponding to PO2 can be determined (t0=t2-(offset01+ offset12)); according to the monitoring moment t3 of PO3, the length of the time offset01 between PO1 and the start moment, the length of the time offset12 between PO1 and PO2, and the length of the time offset23 between PO2 and PO3, the start moment t0 of the PEI monitoring corresponding to PO3 can be determined (t0=t3-(offset01+offset12+offset23)); according to monitoring moment t4 of PO4, the length of the time offset01 between PO1 and the start moment, the length of the time offset12 between PO1 and PO2, and the length of the time offset23 between PO2 and PO3, and the length of time offset34 between PO4 and PO3, the start moment t0 of the PEI monitoring corresponding to PO4 can be determined (t0=t4-(offset01+offset12+offset23+offset34)). Since the start moments corresponding to PO1, PO2, PO3 and PO4 are the same, it can also be determined that PO1, PO2, PO3 and PO4 are different POs associated to the same PEI. In the example in FIG. 7, the start moment of the PEI monitoring is the moment t0.

Compared to the solution that the start parameter includes lengths of time between respective POs and the start moments of PEI monitoring, the start parameter including lengths of time between adjacent POs and the length of time of any PO and the start moment can save bits representing lengths of time.

Optionally, the start parameter includes a length of time between the first paging occasion and the start moment, and/or, an effective duration of the PEI. The first PO is the first PO in the POs associated with the PEI arranged in a time sequence. For example, in the example in FIG. 8, the first PO is PO1. In the example of FIG. 8, the start parameter includes a length of the time offset01 between PO1 and the start moment (that is, a length of time between a moment t0 and a moment t1), and the effective duration T of PEI (shown as shading in FIG. 8). The effective duration of the PEI indicates a jurisdiction duration of the PEI, that is, all the POs in the effective duration are POs associated with the PEI. For example, in the example in FIG. 8, PO1, PO2, PO3 and PO4 are all located in the effective duration of the PEI, hence PO1, PO2, PO3 and PO4 are POs associated with the PEI. Since the start moment of the PEI monitoring can be determined according to PO1 and the length of time between PO1 and the start moment, and the monitoring moments of the respective POs are already known, hence the start moment of the PEI corresponding to the respective POs can be acquired according to the start moment of the PEI monitoring, the monitoring moments of the respective POs and the effective duration of the PEI.

Optionally, the start parameter includes a period of the PEI, and/or, the number of frames of the paging early indication included in the period of PEI, and the start moment can be determined according to the period of the PEI and the number of frames of the paging early indication included in the period of the PEI.

Optionally, a radio frame where the start moment is located, the period of the paging early indication, the number of frames of the paging early indication and an identifier of the terminal device satisfy the following conditions:

$$\text{PEI\_SFN mod T1} = (\text{T1 div N1}) * (\text{UE\_ID mod N1}), \quad (1)$$

PEI_SFN is the radio frame of the start moment;
T1 is the period of the paging early indication;
N1 is the number of frames of the paging early indication included in the period of the paging early indication;
UE_ID is the identifier of the terminal device, and UE_ID=5G-S-TMSI mod 1024.

After the radio frame where the start moment of the PEI monitoring is located is acquired according to formula (1), if the PEI is associated with multiple POs, the rest of POs can know whether the PO is a PO associated with the PEI according to the position of the radio frame where the PEI is located.

For example, a sub-carrier space (SCS) of 15KHz is taken as an example, and if PEI_SFN is a slot (slot) 0 of a radio frame 0, and PO1 is in a slot 2 of a radio frame 1, then the length of time between PO1 and the start moment of the PEI monitoring is 12ms. After PEI_SFN is given according to formula (1), since time intervals between radio frames are all 10ms, offset=2ms can be configured, and the length of time between the start moment and PO1 is 10ms+2ms=12ms.

If, among two adjacent PEIs, the radio frame where the start moment of the first PEI is located is the radio frame 0, and the radio frame in which the start moment of the second PEI is located is a radio frame 2, it means that the POs in the radio frame 0 and the radio frame 1 are both POs associated with the first PEI.

After the start moment of the PEI monitoring is determined according to the start parameter, the duration of the PEI monitoring can be known according to the time window parameter. For example, in FIG. 9, 3 PEI transmission opportunities in the time window for the PEI monitoring are shown, and the three transmission opportunities correspond to the first PEI transmission, the second PEI transmission and the third PEI transmission in FIG. 9 respectively. The time window for the PEI monitoring is the duration of the PEI monitoring determined according to the time window parameter, and the transmission opportunity parameter configured in the time window for the PEI monitoring is 3, that is, the number of transmission times of the PEI is 3.

Optionally, a time interval between any two adjacent PEI transmissions is greater than or equal to the transmission duration of one PEI transmission. For example, the transmission duration of one PEI transmission is T, then the time interval between any two adjacent PEI transmissions is greater than or equal to T.

When the time interval between any two adjacent PEI transmissions for the same beam is equal to the transmission duration of one PEI transmission, it means that a next PEI transmission is started immediately after one PEI transmission.

When the time interval between any two adjacent PEI transmissions for the same beam is greater than the transmission duration of one PEI transmission, it means that a certain offset duration needs to be waited after one PEI transmission before a next PEI transmission is started. That is, the time interval between any two adjacent PEI transmissions is equal to a sum of the transmission duration of one PEI transmission and the offset duration.

Optionally, the offset duration may be at least one of a preset duration, a duration configured by a system information block, a duration configured by an RRC message. The preset duration is a duration agreed by the network device and the terminal device in advance. When the offset duration is a duration configured by the system information block, the network device can transmit the system information block to the terminal device, and the terminal device receives the system information block, and acquires the offset duration according to the system information block. When the offset duration is a duration configured by the RRC message, the network device can transmit the RRC message to the terminal device, and the terminal device receives the RRC message, and acquires the offset duration according to the RRC message.

Optionally, the offset durations corresponding to the time intervals between any two adjacent PEI transmissions may be the same, or may not be the same, they may all be preset durations, or durations configured by system information block(s), or durations configured by RRC message(s), or they may partly be preset duration(s), partly be duration(s) configured by the system information block, partly be duration(s) configured by the RRC message.

For example, in the example in FIG. 9, the time interval between the first PEI transmission and the second PEI transmission is equal to the transmission duration of one PEI transmission added with a first offset duration, the time interval between the second PEI transmission and the third PEI transmission is equal to the transmission duration of one PEI transmission added with a second offset duration. The first offset duration may be equal to the second offset duration, or may not be equal to the second offset duration. The first offset duration may be a preset duration, or may be a duration configured by a system information block, or may be a duration configured by an RRC message; the second offset duration may be a preset duration, or may be a duration configured by a system information block, or may be a duration configured by an RRC message.

After determining the PEI monitoring occasion according to the configuration information, the terminal device may monitor the PEI in the monitoring occasion. Optionally, the network transmits a DCI-based PEI to the terminal device, and the terminal device monitors a PDCCH according to the PEI monitoring occasion determined by the configuration information to acquire the indication information in the PEI. The terminal device can determine the end moment of the PEI monitoring according to the start moment and the duration, and the terminal device monitors the DCI-based PEI between the start moment and the end moment to acquire the indication information in the PEI.

The network device transmits, between the start moment and the end moment, the DCI-based PEI to the terminal device according to the transmission opportunity parameter, and the times that the network device transmits the PEI is the number of transmission times indicated by the transmission opportunity parameter. Sine one SSB set is associated with 8 beams or SSBs, the PEIs correspond one-to-one to the beams. It is assumed that, in the duration of the PEI monitoring, the number of transmission times indicated by the transmission opportunity is R, then it represents that the PEI corresponding to each beam has R number of transmission times. For example, when the PEI is associated with 8 beams and 4 POs, there are 8*R monitoring occasions in the duration of the PEI monitoring.

Optionally, the terminal device monitors the DCI-based PEI in each PEI monitoring occasion. As shown in FIG. 10, the PEI associated with 8 beams and 3 POs is illustratively shown, where the 8 beams correspond to the 8 monitoring occasions for each PEI transmission respectively (as shown as 1, 2, 3, 4, 5, 6, 7 and 8 in FIG. 10). In FIG. 10, in the time window for the PEI monitoring (that is, the duration of the PEI monitoring), there are 8*n monitoring occasions, where n is the number of transmission opportunities of the PEI corresponding to the same beam. Since the number of PEI transmissions R is greater than 1, the terminal device can keep receiving the same PEI for the same beam for multiple times, so as to improve the success rate of the PEI analysis.

Optionally, the terminal device acquires an RSRP corresponding to at least one beam, and determines a target beam according to the RSRP, and determines a target monitoring occasion corresponding to the target beam between the start moment and the end moment. Finally, a PDCCH is monitored in the target monitoring occasion, and the PEI is received. As shown in FIG. 11, the PEI associated with 8 beams and 3 POs is illustratively shown, where the 8 beams correspond to the 8 monitoring occasions for each PEI transmission respectively (as shown as 1, 2, 3, 4, 5, 6, 7 and 8 in FIG. 10). In FIG. 11, in the time window for the PEI monitoring (that is, the duration of the PEI monitoring), there are 8*n monitoring occasions, where n is the number of transmission opportunities corresponding to the same beam.

The terminal device can acquire RSRP(s) corresponding to one or more beams, and can determine the target beam, i.e., a beam 6, according to the RSRP(s) corresponding to the one or more beams. Then, the target monitoring occasion corresponding to the beam 6 can be determined, as shown as shading in FIG. 11. Since the number of transmission times of PEI is greater than 1, the times of PEI transmission is increased, so as to increase the success rate for the terminal device to receive the PEI. At the same time, a monitoring occasion with best channel quality can be determined according to the RSRP(s), and the DCI-based PEI is monitored in the monitoring occasion with best channel quality, so that the DCI-based PEI does not need to be monitored in all monitoring occasions, thus further saving power consumption of the terminal device.

Optionally, the PEI is used to indicate a monitoring state of a PO corresponding to a grouped terminal device. Optionally, all grouped terminal devices of the same PO can correspond to one PEI, that is, all grouped terminal devices of the same PO correspond to one PDCCH search space.

Optionally, the paging early indication includes a first indication bit corresponding to a group to which at least one terminal device belongs, where the first indication bit is used to indicate a monitoring state of a corresponding group to which a terminal device belongs.

Table 1 shows the first indication bit included in the paging early indication, and optionally, the first indication bit includes examples of indication bits in rows 1-8. An example is taken where one PEI is associated with one PO, it is assumed that groups corresponding to the POs include a group 0, a group 1, a group 2, a group 3, a group 4, a group 5, a group 6 and a group 7, and the group to which the terminal device belongs is one of the above groups.

Taking the first indication bit with four bits as an example, as shown in Table 1, for example, when the first indication bit is 0000, it means that the terminal device corresponding to the group 0 needs to be waked up to monitor PO; when the first indication bit is 0001, it means that the terminal device corresponding to the group 1 needs to be waked up to monitor PO; when the first indication bit is 0010, it means that the terminal device corresponding to the group 2 needs to be waked up to monitor PO; when the first indication bit is 0011, it means that the terminal device corresponding to the group 3 needs to be waked up to monitor PO; when the first indication bit is 0100, it means that the terminal device corresponding to the group 4 needs to be waked up to monitor PO; when the first indication bit is 0101, it means that the terminal device corresponding to the group 5 needs to be waked up to monitor PO; when the first indication bit is 0110, it means that the terminal device corresponding to the group 6 needs to be waked up to monitor PO; when the first indication bit is 0111, it means that the terminal device corresponding to the group 7 needs to be waked up to monitor PO. Through the first indication bit, the terminal device corresponding to a certain group in at least one group can be instructed to be waked up to monitor PO.

Optionally, the paging early indication includes a second indication bit corresponding to the at least one paging occasion, where the second indication bit is used to indicate a monitoring state of a group to which the terminal device belongs in the at least one paging occasion associated with the PEI. According to the second indication bit, the monitoring state of the group to which the terminal device belongs corresponding to the at least one PO can be known.

Table 2 shows the second indication bit included in the paging early indication, and the second indication bit indicates the monitoring state of the group to which the terminal device belongs in the case that the PEI is associated with two or two POs. An example is taken where one PEI is associated with two POs, the two POs are PO1 and PO2 respectively, it is assumed that groups corresponding to the PO1 and PO2 both include the group 0, the group 1, the group 2, the group 3, the group 4, the group 5, the group 6 and the group 7, and the group to which the terminal device belongs is one of the above groups.

In this case, the first four bits of the second indication bit may be set to indicate the monitoring state of the group, corresponding to PO1, to which the terminal device belongs, and the last four bits may indicate the monitoring state of the group, corresponding to PO2, to which the terminal device belongs. Or the first four bits of the second indication bit may be set to indicate the monitoring state of the group, corresponding to PO2, to which the terminal device belongs, and the last four bits may indicate the monitoring state of the group, corresponding to PO1, to which the terminal device belongs.

An example is taken where the first four bits of the second indication bit indicate the monitoring state of the group, corresponding to PO1, to which the terminal device belongs, and the last four bits indicate the monitoring state of the group, corresponding to PO2, to which the terminal device belongs, Table 2 shows the second indication bit included in PEI. Optionally, rows 1-9 represent the monitoring states of the terminal devices in the groups corresponding to PO1 indicated by the first four bits of the second indication bit, and rows 10-18 represent the monitoring states of the terminal devices in the groups corresponding to PO2 indicated by the last four bits of the second indication bit.

As shown in Table 2, for example, when the first four bits of the second indication bit are 0000, it means that the terminal device corresponding to the group 0 needs to be waked up to monitor PO1; when the first four bits of the second indication bit are 0001, it means that the terminal device corresponding to the group 1 needs to be waked up to monitor PO1; when the first four bits of the second indication bit are 0010, it means that the terminal device corresponding to the group 2 needs to be waked up to monitor PO1; when the first four bits of the second indication bit are 0011, it means that the terminal device corresponding to the group 3 needs to be waked up to monitor PO1; when the first four bits of the second indication bit are 0100, it means that the terminal device corresponding to the group 4 needs to be waked up to monitor PO1; when the first four bits of the second indication bit are 0101, it means that the terminal device corresponding to the group 5 needs to be waked up to monitor PO1; when the first four bits of the second indication bit are 0110, it means that the terminal device corresponding to the group 6 needs to be waked up to monitor PO1; when the first four bits of the second indication bit are 0111, it means that the terminal device corresponding to the group 7 needs to be waked up to monitor PO1; when the first four bits of the second indication bit are 1000, it means that the terminal devices corresponding to all groups need to be waked up to monitor PO1.

When the last 4 bits of the second indication bit are 0000, it means that the terminal device corresponding to the group 0 needs to be waked up to monitor PO2; when the last 4 bits of the second indication bit are 0001, it means that the terminal device corresponding to the group 1 needs to be waked up to monitor PO2; when the last 4 bits of the second indication bit are 0010, it means that the terminal device corresponding to the group 2 needs to be waked up to monitor PO2; when the last 4 bits of the second indication bit are 0011, it means that the terminal device corresponding to the group 3 needs to be waked up to monitor PO2; when the last 4 bits of the second indication bit are 0100, it means that the terminal device corresponding to the group 4 needs to be waked up to monitor PO2; when the last 4 bits of the second indication bit are 0101, it means that the terminal device corresponding to the group 5 needs to be waked up to monitor PO2; when the last 4 bits of the second indication bit are 0110, it means that the terminal device corresponding to the group 6 needs to be waked up to monitor PO2; when the last 4 bits of the second indication bit are 0111, it means that the terminal device corresponding to the group 7 needs to be waked up to monitor PO2; when the first four bits of the second indication bit are 1000, it means that the terminal devices corresponding to all groups need to be waked up to monitor PO2.

It should be noted that, in the above embodiments, the groups corresponding to PO including 8 groups are taken as an example for description, and the 8 groups can indicate the monitoring state of the terminal device in each group by the 4-bit indication bit. In actual applications, the number of groups corresponding to the PO can also be other values, and the number of bits of the corresponding indication bit can also be adjusted accordingly.

For the second indication bit, one PEI associated with 2 POs is taken as an example for description in Table 2, where one PO corresponds to 4-bit indication bit, and the number of bits of the second indication bit is 8. In actual applications, the number of POs associated with one PEI may also be other values, for example, 3 POs or 4 POs are associated, etc. If one PO corresponds to 4-bit indication bit, and PEI is associated with 3 POs, then the number of bits of the second indication bit can be 12. When the number of POs associated with the PEI takes other values, the number of bits of the second indication bit can also be adjusted accordingly.

Optionally, the paging early indication includes a third indication bit, where the third indication bit is used to indicate an independent monitoring state of at least one grouped terminal device in a corresponding paging occasion. For example, as shown in FIG. 12, an example is taken where one PEI is associated with one PO, the groups corresponding to the PO include a group 0, a group 1, a group 2, a group 3, a group 4, a group 5, a group 6 and a group 7, and the group to which the terminal device belongs is one of the above groups. The PEI includes the third indication bit of each group, and the third indication bit indicates the monitoring state of the group to which the terminal device belongs. For example, when the third indication bit is 1, it represents that the terminal device needs to be waked up to monitor the PO, and/or, when the third indication bit is 0, it represents that the terminal device does not need to be waked up to monitor the PO. The terminal device can know whether it needs to monitor PO according to the third indication bit of the group to which the terminal device belongs.

According to the processing method provided by the present application, a terminal device first receives configuration information transmitted by a network device, where the configuration information is used to indicate a monitoring occasion of a paging early indication, and then the terminal device receives the paging early indication according to the monitoring occasion, where the paging early indication is used to indicate whether a paging message exists in at least one paging occasion. When the success rate of receiving paging early indication is low under the conditions of conflict between PEI and high-priority services, missed detection of paging early indication, poor channel environment, etc., the monitoring occasion of the paging early indication is increased through the configuration information, so as to improve the success rate of receiving the paging early indication, so that the problem that delay in data transmission is finally incurred due to wake-up delay of the terminal device which is resulted from failure in receiving the paging early indication can be reduced.

FIG. 14 is a schematic structural diagram 1 of a processing apparatus provided by an embodiment of the present application. As shown in FIG. 14, the processing apparatus 140 includes:

a first receiving module 141, configured to receive configuration information, where the configuration information is used to indicate a monitoring occasion of a paging early indication;
a second receiving module 142, configured to receive the paging early indication according to the monitoring occasion, where the paging early indication is used to indicate whether a paging message exists in at least one paging occasion.

Optionally, the configuration information includes at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

Optionally, the number of transmission times is a number of transmission times of the paging early indication corresponding to each synchronous signal block.

Optionally, the start parameter includes at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

Optionally, a radio frame where the start moment is located, the period of the paging early indication, the number of frames of the paging early indication and an identifier of the terminal device satisfy the following conditions:

$$\text{PEI\_SFN mod T1}=(\text{T1 div N1})*(\text{UE\_ID mod N1}),$$

PEI_SFN is the radio frame of the start moment, T1 is the period of the paging early indication, N1 is the number of frames of the paging early indication included in the period of the paging early indication, UE_ID is the identifier of the terminal device.

Optionally, a time interval between any two adjacent paging early indication transmissions is greater than or equal to a transmission duration of one paging early indication transmission; and/or, the time interval between any two adjacent paging early indication transmissions is a sum of the transmission duration and an offset duration.

Optionally, the offset duration is at least one of the following:

a preset duration;
a duration configured by a system information block;
a duration configured by a radio resource control message.

Optionally, the first receiving module 141 is specifically configured to:

receive a system information block, and acquire the configuration information according to the system information block; and/or
receive a radio resource control message, and acquire the configuration information according to the radio resource control message.

Optionally, the monitoring occasion locates between the start moment and an end moment, and the end moment is a moment obtained according to the time window parameter.

Optionally, the second receiving module 142 is specifically configured to:

monitor, at the monitoring occasion, a physical downlink control channel according to the transmission opportunity parameter, and receive the paging early indication.

Optionally, the second receiving module 142 is specifically configured to:

acquire a reference signal receiving power corresponding to at least one beam;
determine a target beam according to the reference signal receiving power, and determine a target monitoring occasion corresponding to the target beam in the monitoring occasion;
monitor a physical downlink control channel at the target monitoring occasion, and receive the paging early indication.

Optionally, the paging early indication is used to indicate a monitoring state of the paging occasion corresponding to a grouped terminal device.

Optionally, including at least one of the following:

the paging early indication includes a first indication bit corresponding to a group to which at least one terminal device belongs, and the first indication bit is used to indicate a monitoring state of a corresponding group to which a terminal device belongs;
the paging early indication includes a second indication bit corresponding to the at least one paging occasion, and the second indication bit is used to indicate a monitoring state of a group to which the terminal device belongs in the at least one paging occasion associated with the paging early indication;
the paging early indication includes a third indication bit, and the third indication bit is used to indicate an independent monitoring state of at least one grouped terminal device in a corresponding paging occasion.

The processing apparatus provided in the embodiment of the present application can implement the technical solution shown in the above method embodiments, and its implementation principle and beneficial effects are similar, which will not be repeated here.

FIG. 15 is a schematic structural diagram 2 of a processing apparatus provided by an embodiment of the present application. As shown in FIG. 15, the processing apparatus 150 includes:

an acquiring module 151, configured to acquire at least one paging early indication parameter;
a determining module 152, configured to determine, according to the paging early indication parameter, a monitoring occasion of a paging early indication;
a receiving module 153, configured to receive the paging early indication according to the monitoring occasion, where the paging early indication is used to indicate whether a paging message exists in at least one paging occasion.

Optionally, the paging early indication parameter includes at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

Optionally, the number of transmission times is a number of transmission times of the paging early indication corresponding to each synchronous signal block.

Optionally, the start parameter includes at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

Optionally, a radio frame where the start moment is located, the period of the paging early indication, the number of frames of the paging early indication and an identifier of the terminal device satisfy the following conditions:

$$PEI\_SFN \bmod T1 = (T1 \operatorname{div} N1)*(UE\_ID \bmod N1),$$

PEI_SFN is the radio frame of the start moment, T1 is the period of the paging early indication, N1 is the number of frames of the paging early indication included in the period of the paging early indication, UE_ID is the identifier of the terminal device.

Optionally, a time interval between any two adjacent paging early indication transmissions is greater than or equal to a transmission duration of one paging early indication transmission; and/or,

the time interval between any two adjacent paging early indication transmissions is a sum of the transmission duration and an offset duration.

Optionally, the offset duration is at least one of the following:

a preset duration;
a duration configured by a system information block;
a duration configured by a radio resource control message.

Optionally, an acquiring manner of the paging early indication parameter includes at least one of the following:

acquiring from a system information block;
acquiring from a radio resource control message.

Optionally, the monitoring occasion locates between the start moment and an end moment, and the end moment is a moment obtained according to the time window parameter.

Optionally, the receiving module 153 is specifically configured to:

monitor, at the monitoring occasion, a physical downlink control channel according to the transmission opportunity parameter, and receive the paging early indication.

Optionally, the receiving module 153 is specifically configured to:

acquire a reference signal receiving power corresponding to at least one beam;
determine a target beam according to the reference signal receiving power, and determine a target monitoring occasion corresponding to the target beam in the monitoring occasion;
monitor a physical downlink control channel at the target monitoring occasion, and receive the paging early indication.

Optionally, the paging early indication is used to indicate a monitoring state of the paging occasion corresponding to a grouped terminal device.

Optionally, including at least one of the following:

the paging early indication includes a first indication bit corresponding to a group to which at least one terminal device belongs, and the first indication bit is used to indicate a monitoring state of a corresponding group to which a terminal device belongs;
the paging early indication includes a second indication bit corresponding to the at least one paging occasion, and the second indication bit is used to indicate a monitoring state of a group to which the terminal device belongs in the at least one paging occasion associated with the paging early indication;

the paging early indication includes a third indication bit, and the third indication bit is used to indicate an independent monitoring state of at least one grouped terminal device in a corresponding paging occasion.

The processing apparatus provided in the embodiment of the present application can implement the technical solution shown in the above method embodiments, and its implementation principle and beneficial effects are similar, which will not be repeated here.

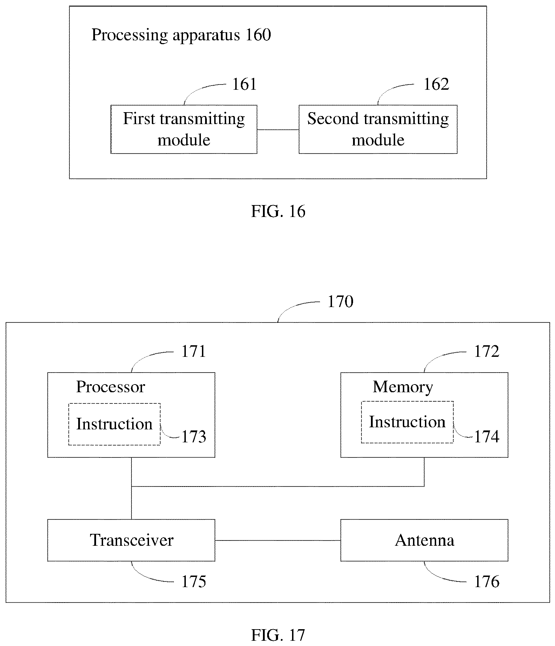

FIG. 16 is a schematic structural diagram 3 of a processing apparatus provided by an embodiment of the present application. As shown in FIG. 16, the processing apparatus 160 includes:

a first transmitting module 161, configured to transmit configuration information, where the configuration information is used to indicate a monitoring occasion of a paging early indication;
a second transmitting module 162, configured to transmit the paging early indication at the monitoring occasion, where the paging early indication is used to indicate whether a paging message exists in at least one paging occasion.

Optionally, the first transmitting module is specifically configured to:

transmit a system information block, where the system information block includes the configuration information; and/or
transmit a radio resource control message, where the radio resource control message includes the configuration information.

Optionally, the configuration information includes at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

Optionally, the number of transmission times is a number of transmission times of the paging early indication corresponding to each synchronous signal block.

Optionally, the start parameter includes at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

Optionally, a radio frame where the start moment is located, the period of the paging early indication, the number of frames of the paging early indication and an identifier of the terminal device satisfy the following conditions:

$$PEI\_SFN \bmod T1 = (T1 \text{ div } N1)*(UE\_ID \bmod N1),$$

PEI_SFN is the radio frame of the start moment, T1 is the period of the paging early indication, N1 is the number of frames of the paging early indication included in the period of the paging early indication, UE_ID is the identifier of the terminal device.

Optionally, a time interval between any two adjacent paging early indication transmissions is greater than or equal to a transmission duration of one paging early indication transmission; and/or, the time interval between any two adjacent paging early indication transmissions is a sum of the transmission duration and an offset duration.

Optionally, the offset duration is at least one of the following:

a preset duration;
a duration configured by the system information block;
a duration configured by the radio resource control message.

Optionally, the monitoring occasion locates between the start moment and an end moment, and the end moment is a moment obtained according to the time window parameter.

Optionally, the paging early indication is used to indicate a monitoring state of the paging occasion corresponding to a respective grouped terminal device.

Optionally, including at least one of the following:

the paging early indication includes a first indication bit corresponding to a group to which at least one terminal device belongs, and the first indication bit is used to indicate a monitoring state of a corresponding group to which a terminal device belongs;

the paging early indication includes a second indication bit corresponding to the at least one paging occasion, and the second indication bit is used to indicate a monitoring state of a group to which the terminal device belongs in the at least one paging occasion associated with the paging early indication;

the paging early indication includes a third indication bit, and the third indication bit is used to indicate an independent monitoring state of at least one grouped terminal device in a corresponding paging occasion.

The processing apparatus provided in the embodiment of the present application can implement the technical solution shown in the above method embodiments, and its implementation principle and beneficial effects are similar, which will not be repeated here.

FIG. 17 is a schematic structural diagram of a communication device provided by an embodiment of the present application. As shown in FIG. 17, the communication device 170 of the present embodiment can be the terminal device (or a component that can be used in the terminal device) or the network device (or a component that can be used in the network device) mentioned in the above method embodiments. The communication device 170 can be used to implement the method corresponding to the terminal device or the network device described in the above method embodiment, for details, please refer to the description in the above method embodiment.

The communication device 170 can include one or more processors 171, and the processor 171 may also be called a processing unit, which can implement some controlling or processing functions. The processor 171 may be a general-purpose processor or a special-purpose processor. For example, a baseband processor or a central processing unit. The baseband processor can be used to process communication protocols and communication data, and the central processing unit can be used to control communication devices, execute software programs, and process data of software programs.

Optionally, the processor 171 may also store instructions 173 or data (such as intermediate data). Optionally, the instruction 173 can be executed by the processor 171, so as to cause the communication device 170 to execute the method corresponding to the terminal device or the method corresponding to the network device described in the above method embodiment.

Optionally, the communication device 170 may include a circuit, which can implement the functions of transmitting or receiving or communicating in the above mentioned method embodiments.

Optionally, the communication device 170 may include one or more processors 172, which can store instructions 174, and the instructions can be executed on the processor 171 to cause the communication device 170 to perform the method described in the above method embodiments.

Optionally, the memory 172 can store data. The processor 171 and the memory 172 may be set separately or integrated together.

Optionally, the communication device 170 may further include a transceiver 175 and/or an antenna 176. The processor 171 may be called a processing unit, which controls the communication device 170 (a terminal device or a core network device or a radio access network device). The transceiver 175 may be called a transceiving unit, a transceiving machine, a transceiving circuit, or a transceiver, etc., and is configured to implement the transceiving function of the communication device 170.

Optionally, if the communication device 170 is configured to implement operations corresponding to the terminal device in the above embodiments, for example, the transceiver 175 can receive configuration information and receive a paging early indication at a monitoring occasion indicated by the configuration information. For example, the transceiver 175 can acquire at least one paging early indication parameter, and the processor 171 can determine a monitoring occasion of a paging early indication according to the paging early indication parameter, and the transceiver 175 can receive the paging early indication according to the monitoring occasion.

Optionally, for the specific implementation process of the processor 171 and the transceiver 175, reference can be made to the relevant descriptions of the above embodiments, which will not be repeated here.

Optionally, if the communication device 170 is configured to implement operations corresponding to the network device in the above embodiments, for example, the transceiver 175 may transmit configuration information, and transmit a paging early indication at a monitoring occasion of the paging early indication indicated by the configuration information, where the paging early indication is used to indicate whether a paging message exists in at least one paging occasion.

Optionally, for the specific implementation process of the processor 171 and the transceiver 175, reference can be made to the relevant descriptions of the above embodiments, which will not be repeated here.

The processor 171 and the transceiver 175 described in the present application can be implemented in an IC (Integrated Circuit, integrated circuit), an analog integrated circuit, an RFIC (Radio Frequency Integrated Circuit, radio frequency integrated circuit), a mixed-signal integrated circuit, an ASIC (Application Specific Integrated Circuit, application specific integrated circuit), a PCB (Printed Circuit Board, printed circuit board), an electronic device, etc. The processor 171 and the transceiver 175 can also be manufactured by various integrated circuit technologies, such as CMOS (Complementary Metal Oxide Semiconductor, complementary metal oxide semiconductor), NMOS (N Metal Oxide-Semiconductor, N metal oxide-semiconductor), Type n metal oxide semiconductor), PMOS (Positive Channel Metal Oxide Semiconductor, positive channel metal oxide semiconductor), BJT (Bipolar Junction Transistor, bipolar junction transistor), bipolar CMOS (BiCMOS), silicon germanium (SiGe), gallium arsenide (GaAs), etc.

In the present application, the communication device can be a terminal device or a network device (such as a base station), which needs to be specifically determined according to the context. In addition, the terminal device can be implemented in various forms. For example, the terminal device described in the present application can include a mobile terminals such as a mobile phone, a tablet computer, a notebook computer, a palm computer, a personal digital assistant (Personal Digital Assistant, PDA), a portable media player (Portable Media Player, PMP), a navigation device, a wearable device, a smart bracelet, a pedometer, and a fixed terminal such as a digital TV or a desktop computer.

Although in the above description of embodiments, the communication device is described as an example of a terminal device or a network device, the scope of the communication device described in the present application is not limited to the above-mentioned terminal device or network device, and the structure of the communication device may not be limited by FIG. 17. The communication device can be a stand-alone device or can be part of a larger device.

An embodiment of the present application also provides a communication system, including a terminal device according to any one of method embodiments; and a network device according to any one of method embodiments.

The embodiment of the present application also provides a terminal device, including: a memory and a processor; where the memory stores a computer program, and when the computer program is executed by the processor, the steps of the processing method according to any one of the above embodiments are implemented.

The embodiment of the present application also provides a network device, including: a memory and a processor; where the memory stores a computer program, and when the computer program is executed by the processor, the steps of the processing method according to any one of the above embodiments are implemented.

The embodiment of the present application also provides a computer-readable storage medium storing a computer program, and when the computer program is executed by the processor, the steps of the processing method according to any one of the above embodiments are implemented.

The embodiments of the terminal device, the network device and the computer-readable storage medium provided by the embodiments of the present application can include all the technical features of any one of the above processing method embodiments, and the extended and described contents of the description are basically the same as those of the above methods, which will not be repeated here.

The embodiment of the present application also provides a computer program product, including a computer program code, and when the computer program code is executed on a computer, the computer is caused to perform the method in the above various possible embodiments.

The embodiment of the present application also provides a chip, including a memory and a processor, where the memory is used to store a computer program, the processor is used to call and execute the computer program from the memory, so as to cause a device on which the chip is installed to perform the methods in the above various possible embodiments.

The above-mentioned serial numbers of the embodiments of the application are for description only, and do not represent the advantages and disadvantages of the embodiments.

The steps in the method of the embodiments of the present application can be sequentially adjusted, combined and deleted according to actual needs.

The units in the device of the embodiments of the present application can be combined, divided and deleted according to actual needs.

In the present application, the same or similar terms, concepts, technical solutions and/or application scenarios are generally described in detail only when they appear for the first time, and when they appear repeatedly later, they are generally not repeated for brevity. When understanding the technical solutions of the present application, please refer to the previous detailed descriptions of the same or similar terms, concepts, technical solutions and/or application scenarios that are not described in detail later.

In the present application, the description of each embodiment has its own emphasis. For the parts not detailed or recorded in one embodiment, please refer to the related descriptions of other embodiments.

The technical features of the technical solution of the present application can be arbitrarily combined. To make the description concise, not all of the possible combinations of the technical features in the above embodiments are described. However, as long as there is no contradiction in the combination of these technical features, it should be considered as the scope of the present application.

Through the description of the above embodiments, those skilled in the art can clearly understand that the method of the above embodiments can be implemented by means of software plus a necessary general hardware platform, and of course it can also be implemented by hardware, but in many cases, the former is the better implementation. Based on this understanding, the essential part of the technical solution of the present application or the part that contributes to the prior art can be embodied in the form of a software product. The computer software product is stored in a storage medium (such as a ROM/RAM, a magnetic disk, an optical disk, etc.) as described above, and includes several instructions to make a terminal device (such as a mobile phone, a computer, a server, a controlled terminal, or a network device, etc.) perform the method of each embodiment of the present application.

In the above-mentioned embodiments, it can be implemented in whole or in part by software, hardware, firmware or any combination thereof. When implemented in software, it can be fully or partially implemented in the form of a computer program product. A computer program product includes one or more computer instructions. When computer program instructions are loaded and executed on a computer, all or part of the processes or functions according to the embodiments of the present application are generated. The computer can be a general-purpose computer, a special-purpose computer, a computer network, or other programmable devices. The computer instructions can be stored in a computer-readable storage medium or transmitted from one computer-readable storage medium to another. For example, the computer instructions can be transmitted from one website, computer, server or data center to another website, computer, server or data center in a wired way (such as coaxial cable, optical fiber, digital subscriber line) or a wireless way (such as infrared, wireless, microwave, etc.). The computer-readable storage medium can be any available medium that computers can access, or data storage devices such as servers and data centers that include one or more available mediums. The available medium can be a magnetic medium (e.g., a floppy disk, a storage disk, a magnetic tape), an optical medium (e.g., DVD), or a semiconductor medium (e.g., a solid state disk Solid State Disk (SSD)) etc.

The above only shows the preferred embodiments of the present application, which do not limit the patent scope of the present application. Any equivalent structure or equivalent process changes made by using the content of the specification and drawings of the present application, or directly or indirectly applied in other related technical fields, are equally included in the patent protection scope of the present application.

**Claims**

1. A processing method, wherein the method is applied in a terminal device and comprises following steps:

    51, receiving configuration information, wherein the configuration information is used to indicate a monitoring occasion of a paging early indication;

    S2, receiving the paging early indication according to the monitoring occasion, wherein the paging early indication is used to indicate whether a paging message exists in at least one paging occasion.

2. The method according to claim 1, wherein the configuration information comprises at least one of the following:

    a start parameter used to indicate a start monitoring occasion of the paging early indication;
    a time window parameter used to indicate a duration of monitoring of the paging early indication;
    a transmission opportunity parameter used to indicate a number of transmission times of the paging early indication.

3. The method according to claim 2, wherein the number of transmission times is a number of transmission times of the paging early indication corresponding to each synchronous signal block.

4. The method according to claim 2, wherein the start parameter comprises at least one of the following:

    a length of time between the at least one paging occasion and the start moment;
    a length of time between adjacent paging occasions;
    a length of time between any paging occasion and the start moment;
    a length of time between a first paging occasion and the start moment;
    an effective duration of the paging early indication;
    a period of the paging early indication;
    a number of frames of the paging early indication.

5. The method according to claim 4, wherein a radio frame where the start moment is located, the period of the paging early indication, the number of frames of the paging early indication and an identifier of the terminal device satisfy the following conditions:

$$PEI\_SFN \bmod T1 = (T1 \text{ div } N1) * (UE\_ID \bmod N1),$$

PEI_SFN is the radio frame where the start moment is located, T1 is the period of the paging early indication, N1 is the number of frames of the paging early indication comprised in the period of the paging early indication, UE_ID is the identifier of the terminal device.

6. The method according to claim 4, wherein a time interval between any two adjacent paging early indication transmissions is greater than or equal to a transmission duration of one paging early indication transmission; and/or, the time interval between any two adjacent paging early indication transmissions is a sum of the transmission duration and an offset duration.

7. The method according to claim 6, wherein the offset duration is at least one of the following:

   a preset duration;
   a duration configured by a system information block;
   a duration configured by a radio resource control message.

8. The method according to claim 2, wherein the step S1 comprises:

   receiving a system information block, and acquiring the configuration information according to the system information block; and/or
   receiving a radio resource control message, and acquiring the configuration information according to the radio resource control message.

9. The method according to any one of claims 2-8, wherein the monitoring occasion locates between the start moment and an end moment, and the end moment is a moment obtained according to the time window parameter.

10. The method according to claim 9, wherein the step S2 comprises:
    monitoring, at the monitoring occasion, a physical downlink control channel according to the transmission opportunity parameter, and receiving the paging early indication.

11. The method according to claim 9, wherein the step S2 comprises:

    acquiring a reference signal receiving power corresponding to at least one beam;
    determining a target beam according to the reference signal receiving power, and determining a target monitoring occasion corresponding to the target beam in the monitoring occasion;
    monitoring a physical downlink control channel at the target monitoring occasion, and receiving the paging early indication.

12. The method according to claim 11, wherein the paging early indication is used to indicate a monitoring state of the paging occasion corresponding to a grouped terminal device.

13. The method according to claim 12, comprising at least one of the following:

    the paging early indication comprises a first indication bit corresponding to a group to which at least one terminal device belongs, and the first indication bit is used to indicate a monitoring state of a corresponding group to which a terminal device belongs;
    the paging early indication comprises a second indication bit corresponding to the at least one paging occasion, and the second indication bit is used to indicate a monitoring state of a group to which the terminal device belongs in the at least one paging occasion associated with the paging early indication;
    the paging early indication comprises a third indication bit, and the third indication bit is used to indicate an independent monitoring state of at least one grouped terminal device in a corresponding paging occasion.

14. A processing method, wherein the method is applied in a terminal device and comprises following steps:

S10, acquiring at least one paging early indication parameter;

S20, determining, according to the paging early indication parameter, a monitoring occasion of a paging early indication;

S30, receiving the paging early indication according to the monitoring occasion, wherein the paging early indication is used to indicate whether a paging message exists in at least one paging occasion.

15. The method according to claim 14, wherein the paging early indication parameter comprises at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

16. The method according to claim 15, wherein the number of transmission times is a number of transmission times of the paging early indication corresponding to each synchronous signal block.

17. The method according to claim 15, wherein the start parameter comprises at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;
a number of frames of the paging early indication.

18. The method according to claim 17, wherein a radio frame where the start moment is located, the period of the paging early indication, the number of frames of the paging early indication and an identifier of the terminal device satisfy the following conditions:

$$PEI\_SFN \bmod T1 = (T1 \operatorname{div} N1)*(UE\_ID \bmod N1),$$

PEI_SFN is the radio frame where the start moment is located, T1 is the period of the paging early indication, N1 is the number of frames of the paging early indication comprised in the period of the paging early indication, UE_ID is the identifier of the terminal device.

19. The method according to claim 17, wherein a time interval between any two adjacent paging early indication transmissions is greater than or equal to a transmission duration of one paging early indication transmission; and/or, the time interval between any two adjacent paging early indication transmissions is a sum of the transmission duration and an offset duration.

20. The method according to claim 19, wherein the offset duration is at least one of the following:

a preset duration;
a duration configured by a system information block;
a duration configured by a radio resource control message.

21. The method according to claim 15, wherein an acquiring manner of the paging early indication parameter comprises at least one of the following:

acquiring from a system information block;
acquiring from a radio resource control message.

22. The method according to any one of claims 15-21, wherein the monitoring occasion locates between the start moment and an end moment, and the end moment is a moment obtained according to the time window parameter.

**23.** The method according to claim 22, wherein the step S30 comprises:
monitoring, at the monitoring occasion, a physical downlink control channel according to the transmission opportunity parameter, and receiving the paging early indication.

**24.** The method according to claim 22, wherein the step S30 comprises:

acquiring a reference signal receiving power corresponding to at least one beam;
determining a target beam according to the reference signal receiving power, and determining a target monitoring occasion corresponding to the target beam in the monitoring occasion;
monitoring a physical downlink control channel at the target monitoring occasion, and receiving the paging early indication.

**25.** The method according to claim 24, wherein the paging early indication is used to indicate a monitoring state of the paging occasion corresponding to a grouped terminal device.

**26.** The method according to claim 25, comprising at least one of the following:

the paging early indication comprises a first indication bit corresponding to a group to which at least one terminal device belongs, and the first indication bit is used to indicate a monitoring state of a corresponding group to which a terminal device belongs;
the paging early indication comprises a second indication bit corresponding to the at least one paging occasion, and the second indication bit is used to indicate a monitoring state of a group to which the terminal device belongs in the at least one paging occasion associated with the paging early indication;
the paging early indication comprises a third indication bit, and the third indication bit is used to indicate an independent monitoring state of at least one grouped terminal device in a corresponding paging occasion.

**27.** A processing method, wherein the method is applied in a network device and comprises following steps:

S 11, transmitting configuration information, wherein the configuration information is used to indicate a monitoring occasion of a paging early indication;
S 12, transmitting the paging early indication at the monitoring occasion, wherein the paging early indication is used to indicate whether a paging message exists in at least one paging occasion.

**28.** The method according to claim 27, wherein the step S11 comprises:

transmitting a system information block, wherein the system information block comprises the configuration information; and/or
transmitting a radio resource control message, wherein the radio resource control message comprises the configuration information.

**29.** The method according to claim 28, wherein the configuration information comprises at least one of the following:

a start parameter used to indicate a start monitoring occasion of the paging early indication;
a time window parameter used to indicate a duration of monitoring of the paging early indication;
a transmission opportunity parameter used to indicate a number of transmission times of the paging early indication.

**30.** The method according to claim 29, wherein the number of transmission times is a number of transmission times of the paging early indication corresponding to each synchronous signal block.

**31.** The method according to claim 29, wherein the start parameter comprises at least one of the following:

a length of time between the at least one paging occasion and the start moment;
a length of time between adjacent paging occasions;
a length of time between any paging occasion and the start moment;
a length of time between a first paging occasion and the start moment;
an effective duration of the paging early indication;
a period of the paging early indication;

a number of frames of the paging early indication.

32. The method according to claim 31, wherein a radio frame where the start moment is located, the period of the paging early indication, the number of frames of the paging early indication and an identifier of the terminal device satisfy the following conditions:

$$PEI\_SFN \bmod T1 = (T1 \operatorname{div} N1) * (UE\_ID \bmod N1),$$

PEI_SFN is the radio frame where the start moment is located, T1 is the period of the paging early indication, N1 is the number of frames of the paging early indication comprised in the period of the paging early indication, UE_ID is the identifier of the terminal device.

33. The method according to claim 31, wherein a time interval between any two adjacent paging early indication transmissions is greater than or equal to a transmission duration of one paging early indication transmission; and/or, the time interval between any two adjacent paging early indication transmissions is a sum of the transmission duration and an offset duration.

34. The method according to claim 33, wherein the offset duration is at least one of the following:

a preset duration;
a duration configured by the system information block;
a duration configured by the radio resource control message.

35. The method according to any one of claims 29-34, wherein the monitoring occasion locates between the start moment and an end moment, and the end moment is a moment obtained according to the time window parameter.

36. The method according to any one of claims 29-34, wherein the paging early indication is used to indicate a monitoring state of the paging occasion corresponding to a respective grouped terminal device.

37. The method according to claim 36, comprising at least one of the following:

the paging early indication comprises a first indication bit corresponding to a group to which at least one terminal device belongs, and the first indication bit is used to indicate a monitoring state of a corresponding group to which a terminal device belongs;
the paging early indication comprises a second indication bit corresponding to the at least one paging occasion, and the second indication bit is used to indicate a monitoring state corresponding to a group to which the terminal device belongs in the at least one paging occasion associated with the paging early indication;
the paging early indication comprises a third indication bit, and the third indication bit is used to indicate an independent monitoring state of at least one grouped terminal device in a corresponding paging occasion.

38. A communication system, comprising:

a terminal device configured to execute the method according to claims 1-26;
a network device configured to execute the method according to claims 27-37.

39. A communication device, comprising: a memory and a processor;

the memory is configured to store a program instruction;
the processor is configured to call the program instruction in the memory to execute the processing method according to any one of claims 1-37.

40. A computer-readable storage medium, wherein the storage medium stores a computer program; when the computer program is executed, the processing method according to any one of claims 1-37 is implemented.

FIG. 1

FIG. 2

FIG. 3

Time window for
PEI monitoring

PO1    PO2    PO3

Offset between PEI and PO1

Paging early indication (PEI)

Paging occasion (PO)

FIG. 4

SSB set    First PEI        Second PEI       SSB set    SSB set    Paging occasion (PO)
           transmission     transmission

           M  M      M  M    M  M      M  M
           O  O  ... O  O    O  O  ... O  O
           1  2      7  8    1  2      7  8

FIG. 5

FIG. 6

FIG. 7

FIG. 8

Time window for PEI monitoring

| First PEI transmission | | Second PEI transmission | | Third PEI transmission |

t0  t1  t2  t3  t4  t5

T — T1 — T — T2 — T

Start moment

FIG. 9

Time window for PEI monitoring

1 2 3 4 5 6 7 8    1 2 3 4 5 6 7 8    1 2 3 4 5 6 7 8

Monitoring PEI

FIG. 10

Time window for PEI monitoring

FIG. 11

Paging occasion (PO)

| Group 0 | Group 1 | Group 2 | Group 3 | Group 4 | Group 5 | Group 6 | Group 7 |
|---------|---------|---------|---------|---------|---------|---------|---------|

FIG. 12

Terminal device | Network device

S131, transmitting configuration information, where the configuration information includes at least one paging early indication parameter

S132, acquiring at least one paging early indication parameter

S133, determining a monitoring occasion of a paging early indication according to the paging early indication parameter

S134, transmitting the paging early indication in the monitoring occasion

S135, receiving the paging early indication according to the monitoring occasion

FIG. 13

Processing apparatus 140

141

142

First receiving module | Second receiving module

FIG. 14

Processing apparatus 150

151

152

153

Acquiring module | Determining module | Receiving module

FIG. 15

Processing apparatus 160

First transmitting module — 161

Second transmitting module — 162

FIG. 16

— 170

Processor — 171

Instruction 173

Memory — 172

Instruction 174

Transceiver — 175

Antenna — 176

FIG. 17

## INTERNATIONAL SEARCH REPORT

| International application No. |
| --- |
| **PCT/CN2021/127177** |

**A.    CLASSIFICATION OF SUBJECT MATTER**

H04W 76/20(2018.01)i;  H04W 52/02(2009.01)i;  H04W 68/00(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; CNABS; ENTXTC; DWPI; VEN; 3GPP; ETSI; IEEE; CNKI; ENTXT: 监听, 时机, 时间, 指示, 寻呼提前指示, 发送, 接收, 终端设备, 配置, UE, PEI, PO, pag+, early, indicat+, monit+, listen+, occasion, terminal+, tim+, config+

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 113163476 A (ZTE CORP.) 23 July 2021 (2021-07-23) description, paragraphs 0005-0026 and 0253-0259 | 1-40 |
| Y | Xiaomi Communications. "How a UE determines the PEI radio resource(s) to monitor for paging" *3GPP, R2-2107538*, 28 August 2021 (2021-08-28), pages 2-3 | 1-40 |
| Y | MEDIATEK INC. "Paging Monitoring with PEI and UE Subgrouping" *3GPP, R2-2108593*, 28 August 2021 (2021-08-28), page 2 | 1-40 |
| A | CN 109286966 A (VIVO COMMUNICATION TECHNOLOGY CO., LTD.) 29 January 2019 (2019-01-29) entire document | 1-40 |
| A | WO 2021180206 A1 (MEDIATEK INC.) 16 September 2021 (2021-09-16) entire document | 1-40 |

☐ Further documents are listed in the continuation of Box C.      ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **15 June 2022** | **24 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/127177**

| Patent document cited in search report | | | Publication date (day/month/year) | Patent family member(s) | | | Publication date (day/month/year) |
|---|---|---|---|---|---|---|---|
| CN | 113163476 | A | 23 July 2021 | None | | | |
| CN | 109286966 | A | 29 January 2019 | US | 2021168759 | A1 | 03 June 2021 |
| | | | | WO | 2019015459 | A1 | 24 January 2019 |
| | | | | EP | 3657864 | A1 | 27 May 2020 |
| | | | | CN | 109286966 | B | 04 August 2020 |
| | | | | EP | 3657864 | A4 | 05 August 2020 |
| WO | 2021180206 | A1 | 16 September 2021 | None | | | |

Form PCT/ISA/210 (patent family annex) (January 2015)